(19) Europäisches Patentamt
European Patent Office
Office européen des brevets

(11) EP 1 370 563 B1

(12) FASCICULE DE BREVET EUROPEEN

(45) Date de publication et mention de la délivrance du brevet:
**06.09.2006 Bulletin 2006/36**

(21) Numéro de dépôt: **02753730.7**

(22) Date de dépôt: **21.03.2002**

(51) Int Cl.:
***C07F 1/00*** *(2006.01)* ***C01B 37/02*** *(2006.01)*
***B01D 53/00*** *(2006.01)*

(86) Numéro de dépôt international:
**PCT/FR2002/000986**

(87) Numéro de publication internationale:
**WO 2002/076991 (03.10.2002 Gazette 2002/40)**

# (54) MATERIAUX HYBRIDES ORGANIQUES-INORGANIQUES, MESOPOREUX, POUR SEPARER LES GAZ

HYBRIDE ORGANISCH-ANORGANISCHE MESOPORÖSEN MATERIALIEN, TRENNUNG VON GASEN

MESOPOROUS ORGANIC-INORGANIC HYBRID MATERIALS FOR SEPARATING GASES

(84) Etats contractants désignés:
**AT BE CH CY DE DK ES FI FR GB GR IE IT LI LU MC NL PT SE TR**

(30) Priorité: **21.03.2001 FR 0103802**

(43) Date de publication de la demande:
**17.12.2003 Bulletin 2003/51**

(73) Titulaire: **CENTRE NATIONAL DE LA RECHERCHE SCIENTIFIQUE (CNRS)**
**75794 Paris Cedex 16 (FR)**

(72) Inventeurs:
- **CORRIU, Robert**
  **F-34090 Montpellier (FR)**
- **MEHDI, Ahmad**
  **F-34090 Montpellier (FR)**
- **REYE, Catherine,**
  **Résidence Le Bussy d'Amboise**
  **F-34080 Montpellier (FR)**
- **LEDON, Henry**
  **F-78000 Versailles (FR)**
- **GUILARD, Roger**
  **21121 Fontaine Les Dijon (FR)**

(74) Mandataire: **Bernasconi, Jean Raymond et al**
**c/o Cabinet Lavoix,**
**2, Place d'Estienne d'Orves**
**75441 Paris Cédex (FR)**

(56) Documents cités:
- **CHEMICAL ABSTRACTS, vol. 132, no. 17, 24 avril 2000 (2000-04-24) Columbus, Ohio, US; abstract no. 226577, GRAHAM, U.M. ET AL.: "chemically active aerogels for hot gas clean-up in a IGCC process" XP002186597 & PREPR. SYMP.- AM. CHEM. SOC., DIV. FUEL CHEM., vol. 44, no. 3, 1999, pages 706-710,**
- **CHEMICAL ABSTRACTS, vol. 131, no. 6, 9 août 1999 (1999-08-09) Columbus, Ohio, US; abstract no. 77055, CORRIU, R.J.P ET AL.: "synthesis by neutral surfactant assembly of ordered mesoporous organic-inorganic hybrid materials incorporating phosphorus centers" XP002186598 & C.R. ACAD. SCI., SER. IIC: CHIM., vol. 2, no. 1, 1999,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention a pour objet l'élaboration de matériaux hybrides organiques - inorganiques, mésoporeux, utilisables dans le domaine de la purification des gaz.

Les techniques actuelles de séparation de gaz industriels (distillation cryogénique ou adsorption sur zéolithes) ainsi que celles de leur purification (distillation cryogénique ou catalyse) ne sont pas toujours optimisées en termes aussi bien économiques (cryogénie pour les petites quantités) qu'en ce qui concerne la pureté des gaz (l'oxygène obtenu par adsorption contient 5% d'argon, par exemple). De nombreux travaux ont montré que des gaz, tels que l'oxygène, l'hydrogène ou le monoxyde de carbone, réagissent sélectivement et de façon réversible avec des complexes de métaux de transition. Ainsi les complexes de cobalt (II) du cyclame ou du cyclène, sont connus pour coordonner fortement le dioxygène en solution (R. Machida, E. Kimura, M. Kodama ; Inorg. Chem. 1983, 22, 2055).

Cependant la durée de vie des complexes oxygénés en solution est limitée car ces derniers peuvent subir des réactions de dégradation irréversibles (A.E. Martell, A.K. Basak, C.J. Raleigh ; Pure Appl.Chem. 1988, 60, 1325-1329). De plus, la desoxygénation de ces espèces ne peut pas être réalisée par simple diminution de la pression partielle en dioxygène. L'immobilisation du ligand sur une matrice solide doit faciliter son utilisation, limiter la dégradation de l'espèce oxygénée et améliorer la réversibilité de la réaction.

La synthèse directe en milieu micellaire de silices mésostructurées, de grandes surfaces spécifiques (800-1400 $m^2.g^{-1}$) avec une distribution de pores très étroite et ajustable entre 2 et 10 nm a été découverte en 1992 (J.S. Beck, J.C. Vartuli, W.J. Roth, M.E. Leonowicz, C.T, Kresge, K.D. Schmitt, C.T. Chu, D.H. Olson, E.W. Sheppard, S.B. Higgins, J.L. Schlenker ; J. Am. Chem. Soc. 1992, 114, 10834). Cette nouvelle famille de matériaux mésoporeux (MTS : abréviation de l'appellation anglaise "Micelle - Templated Silica"), résulte de l'assemblage coopératif d'une phase inorganique autour d'une phase organique constituée de tensioactifs en concentration micellaire (J.Y.Ying, C.P. Mehnert, M.S. Wong ; Angew. Chem. Int. Ed., 1999, 38, 56-77). Une fois le matériau formé, l'élimination du tensioactif libère la porosité de la charpente inorganique et conduit ainsi à une phase inorganique poreuse et organisée.

A l'occasion de ses recherches tendant à diversifier ses moyens de séparation des gaz, la demanderesse a développé le nouveau procédé objet de la présente invention.

L'invention a pour objet un procédé de préparation de matériaux hybrides organiques - inorganiques, à porosité et fonctionnalité contrôlée, comprenant :

Une étape (a), d'hydrolyse et de polycondensation d'au moins un composé de formule (I) :

$$Z\text{-}R_1\text{-}Si(OR)(OR')(OR'') \qquad (I)$$

dans laquelle :

Z représente soit un atome d'halogène choisi parmi les atomes de chlore, de brome ou d'iode, soit un groupe amino ou phosphino ;
R, R' et R", identiques ou différents, représentent chacun indépendamment les uns des autres, un radical alkyle comportant de un à quatre atomes de carbone,
$R_1$ représente un radical divalent dérivé d'une chaîne hydrocarbonée aliphatique saturée ou insaturée, comportant de 1 à 30 atomes de carbone, dans laquelle sont éventuellement intercalés, un ou plusieurs chaînons structuraux choisis parmi le groupe arylène ou les fragments -O-, -S-, -O-C(=O)-, -N($R_6$)-C(=O)- ou -N($R_6$)-, dans lesquels $R_6$ représente un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle,
avec au moins un silicate alcalin ou alcalino-terreux (II) en une proportion molaire (I) / (II) = 1/ 9 en présence d'au moins un agent tensioactif non ionique en concentration micellaire, pour former une silice mésoporeuse représentée par la formule (III) :

$$Z\text{-}R_1\text{-}SiO_{1,5}\ 9\ SiO_2 \qquad (III),$$

ladite étape (a) étant suivie

d'une étape (b) d'ancrage, sur la silice mésoporeuse de formule (III), d'un équivalent d'un composé organique, représenté par (Δ)NH, comprenant au moins un groupe -NH- susceptible de réagir avec la fonction Z de ladite silice

mésoporeuse, pour former la silice mésoporeuse fonctionnalisée représentée par la formule (IV) :

$$(\Delta)N\text{-}R_1\text{-}SiO_{1,5}, 9\ SiO_2 \qquad (IV).$$

Selon une première variante du procédé tel que défini ci-dessus, l'étape (b) est suivie d'une étape (c) de complexation d'un cation métallique, cation métallique signifie les cations des métaux de transition les cations des métaux nobles, les cations des lanthanides et les cations des actinides, par réaction de la silice mésoporeuse fonctionnalisée représentée par la formule (IV), avec un sel dudit cation, pour former un complexe organométallique (V).

Dans le procédé et sa variante tels que définis ci-dessus, $R_1$ représente plus particulièrement le radical divalent de formule ($R_{1a}$) :

$$-(CH_2)_o-(Q)_q-(CH_2)_r-(Ar)_s-(CH_2)_t-(U)_u-(CH_2)_v- \qquad (R_{1a}),$$

dans laquelle :

o, r, t et v, identiques ou différents, représentent indépendamment l'un de l'autre, un nombre entier supérieur ou égal à 0 et inférieur ou égal à 6,
Q et U, identiques ou différents représentent indépendamment l'un de l'autre, un atome d'oxygène, un atome de soufre ou un des groupes -O-C(=O)-, -C(=O)-O-, -NH-C(=O)-, -C(=O)-NH- ou -NH-,
q, s et u, identiques ou différents, représentent indépendamment l'un de l'autre un nombre entier supérieur ou égal à 0 et inférieur ou égal à 1,
Ar représente un radical arylène et notamment un radical phénylène, étant entendu que :

lorsque q est égal à 1, o est différent de 0,
lorsque q est égal à 1 et que u est égal à 0, la somme r+s+t+v est différente de 0,
lorsque u est égal à 1, v est différent de 0,
lorsque u est égal à 1 et que q est égal à 0, la somme o+r+s+t est différente de 0,
lorsque s est égal à 0, et que q et u sont chacun égaux à 1, la somme r + t est différente de 0, et
la somme o + r + t + v + est inférieure ou égale à 24.

$R_1$ représente tout particulièrement un des radicaux divalents, $-(CH_2)_x-$ dans lequel x est compris entre 3 et 20 et est de préférence entre 3 et 6 inclus ou un des radicaux :

$$-CH_2-CH(OH)-CH_2-O-(CH_2)_3- \text{ ou } -CH_2-(1,4-C_6H_4)-CH_2-NH-(CH_2)_3-.$$

Dans la variante du procédé telle que ci-dessus, cation métallique signifie les cations des métaux de transition les cations des métaux nobles, les cations des lanthanides et les cations des actinides. Le cation métallique est plus particulièrement choisi parmi les cations du fer, du cobalt, de l'europium, de l'uranium, du nickel, du manganèse, du cuivre, du chrome, du zinc, de l'argent, du cadmium, du plomb, du mercure, de l'or, du platine, du palladium, de l'uranium, du cérium ou du gadolinium.

Dans la variante du procédé telle que ci-dessus, le sel de cation métallique est plus particulièrement choisi parmi le chlorure, le bromure, l'iodure, le fluorure, le tétrafluoroborate, le sulfate ou le nitrate dudit cation.

Comme composés Δ(NH) qui peuvent être mis en oeuvre dans le procédé et sa variante tel que définis ci-dessus, il y a par exemple, les composés cycliques, comme les polyazacycloalcanes, les dérivés de porphyrines ou les polyamines aliphatiques.

Comme polyazacycloalcanes, il y a plus particulièrement les triazacycloalcanes, tels que par exemple, le 1, 4, 7 - triazacyclononane, le 1, 4, 8 - triazacyclodécane ou le 1, 5 , 9 - triazacyclododécane, les tétraazacycloalcanes, tels que par exemple, le 1, 4, 7, 10 - tétraazacyclododécane (cyclène), le 1, 4, 7, 10 - tétrazacyclotridécane, le 1, 4, 7, 11 - tétraazacyclotétradécane, le 1, 4, 8, 11 - tétraazacyclotétradécane (ou cyclame), le 1, 4, 8 - triméthyl 1, 4, 8, 11 - tétraazacyclotétradécane, le 1, 4, 8, 12 - tétraazacyclopentadécane, le 1, 5, 9, 13 - tétraazacyclohexadécane, le 1, 5, 10, 14 - tétraazacyclooctadécane, le 1 - méthyl 1, 4, 8, 11 - tétraazacyclotétradécane, le 6 - dodécyl 1, 4, 8, 11 - tétraazacyclotétradécane, le 3 - dodécyl 1, 5, 9, 13 - tétraazacyclohexadécane, le 3 - dodécyl 1, 5, 10, 14 - tétraazacyclooctadécane, le 5, 5, 7, 12, 12, 14 - hexaméthyl 1, 4, 8, 11 - tétraazacyclotétradécane, le 1 - benzyl 1, 4, 8, 11 - tétraazacyclotétradécane, le 1 - [(2 - pyridyl) méthyl] 1, 4, 8, 11 - tétraazacyclotétradécane, le 1 - [(3 - pyridyl) méthyl] 1, 4, 8, 11 - tétraazacyclotétradécane ou le 1, 4 - dibenzyl 1, 4, 8, 11 - tétraazacyclotétradécane, les pentaazacycloalcanes, tels que par exemple, le 1, 4, 7, 10, 13 - pentaazacyclopentadécane, le 4, 7, 11, 15 - pentaazacyclooctadécane, le 1, 5, 9, 13, 17 - pentaazacyclooctadécane ou le 1, 4, 7, 10 - tétraéthyl 1, 4, 7, 10, 13 - pentaazacyclopentadécane, les

hexaazacycloalcanes, tels que par exemple, le 1, 4, 7, 10, 13, 16 - hexaazacyclooctadécane, le 1, 5, 9, 13, 17, 20 - hexaazacyclotétracosane ou le 1, 4, 7, 10, 13 - pentaéthyl 1, 4, 7, 10, 13, 16 - hexaazacyclooctadécane, les octaazacycloalcanes, tels que par exemple, le 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 - octaazacyclooctacosane, le 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 octaazacyclooctacosane ou le 6, 6, 13, 13, 20, 20, 27, 27 - octaméthyl 1, 4, 8, 11, 15, 18, 22, 25 - octaazacyclooctacosane - 2, 3, 16, 17 - tétraone, les hexadécaazacycloalcanes, tels que par exemple, le 1, 4, 8, 11, 15, 18, 22, 25, 29, 32, 36, 39, 43, 46, 50, 53 - hexadécaazacyclohexapentacontane, le 1, 4, 7, 10, 13, 16, 19, 22, 25, 28, 31, 34, 37, 40, 43, 46 - hexadécaazacyclooctatétracontane, le 1, 4, 7, 10, 13, 16, 19, 22, 25, 28, 31, 34, 37, 40, 43, 46 - hexadécaazacyclooctatétracontane - 2, 3, 14, 15, 26, 27, 38, 39 - octaone, le 1, 4, 8, 11, 15, 18, 22, 25, 29, 32, 36, 39, 43, 46, 50, 53 - hexadécaazacyclohexapentacontane - 2, 3, 16, 17, 30, 31, 44, 45 - octaone ou le 1, 4, 7, 10, 13, 16, 19, 22, 25, 28, 31, 34, 37, 40, 43, 46 - hexadécaazacyclooctatétracontane - 2, 3, 14, 15, 26, 27, 38, 39 - octaone.

Comme dérivés de la porphyrine il y a par exemple: le [4-(2,8,13,17-tétraethyl-3,7,12,18-tétramethyl-porphyrin-5-yl)-phénylamine], le [4-(2,8,13,17-tétraethyl-3,7,12,18-tétramethyl-porphyrin-5-yl)-benzylamine], le [4-(15-phénylporphyrin-5-yl)-phénylamine], le [4-(15-phényl-porphyrin-5-yl)-benzylamine], le [4-(10,15,20-triphényl-porphyrin-5-yl)-phénylamine], ou le [4-(10,15,20-triphénylporphyrin-5-yl)-benzylamine].

Comme composés acycliques il y a par exemple les polyamines aliphatiques et plus particulièrement les triazaalcanes tels que, par exemple, le 4 - azaheptan - .1, 7 - diamine, le 4 - azaoctan - 1, 8 - diamine ou le 5 - azanonan - 1, 9 - diamine, les tétraazaalcanes, tels que par exemple, le 4, 7 - diazadécan - 1, 10 - diamine, le 4, 8 - diazaundécan - 1, 11 - diamine, le 5, 9 - diazadodécan -1, 12 - diamine, le 5, 8 - diazadodécan - 1, 12 - diamine, le 4, 8, diazadodécan -1, 12 - diamine, le 5, 9 - diazatridécan - 1, 13 - diamine, le 5, 10 - diazatétradécan - 1, 14 - diamine, le 6, 10 - diazapentadécan - 1, 15 - diamine, les pentaazaalcanes, tels que par exemple, le 1, 4, 7 - triazatridécan 1, 13 - diamine, le 4, 8, 12 - triazahexadécan - 1, 16 - diamine ou le 5, 8, 11 - triazapentadécan - 1, 15 diamine ou encore les hexaazaalcanes, tels que par exemple, le 4, 7, 10, 13 - tétraazahexadécan -1, 16 -diamine ou le 5, 9, 13, 17 - tétraazaeicosan - 1, 20 - diamine.

Selon un autre aspect de la présente invention, celle-ci a pour objet la silice mésoporeuse fonctionnalisée représentée par la formule (IV), telle que définie précédemment, ainsi que le complexe métallique (V) susceptible d'être obtenu par réaction dudit composé de formule (IV), avec un sel de cation métallique tel que défini précédemment.

Un dernier aspect de la présente invention a pour objet l'utilisation de ces matériaux métallés tels que définis précédemment, pour séparer un gaz déterminé d'un mélange de gaz, Elle comprend la mise en contact dudit mélange de gaz avec un des gels hybrides métallés tels que définis précédemment, dans des conditions permettant l'absorption dudit gaz à séparer, suivie de la désorption dudit gaz fixé sur le solide puis de la récupération dudit gaz désorbé. Cette utilisation est de préférence appliquée à la séparation de l'oxygène de l'air, soit pour produire de l'oxygène pur, soit pour éliminer l'oxygène de l'air.

Compte tenu de l'aptitude complexante de ces ligands, vis à vis des sels de métaux de transition ainsi que des sels de lanthanides, la méthode de complexation est générale à tous les sels des métaux précédemment cités et les matériaux ainsi préparés sont avantageusement utilisés en catalyse hétérogène, pour la dépollution des effluents, pour la purification, l'activation et le stockage des gaz, pour l'obtention de matériaux photoluminescents et de matériaux à propriétés magnétique ou électrique.

Les exemples suivants illustrent l'invention sans toutefois la limiter.

## I - Préparation de matériaux mésoporeux

### a - Principe de la méthode

Le procédé objet de la présente invention comprend l'hydrolyse et la polycondensation d'un mélange de (3 - chloropropyl) triméthoxysilane et de silicate de sodium en proportion 1/9, en présence de tensioactifs non-ioniques tels que par exemple le TERGITOL™ 15S12 [$CH_3(CH_2)_{14}$-$(OCH_2CH_2)_{12}$-OH] ou le co-potymère bloc $EO_{20}$ $PO_{70}$ $EO_{20}$ (PLURONIC™ P. 123).

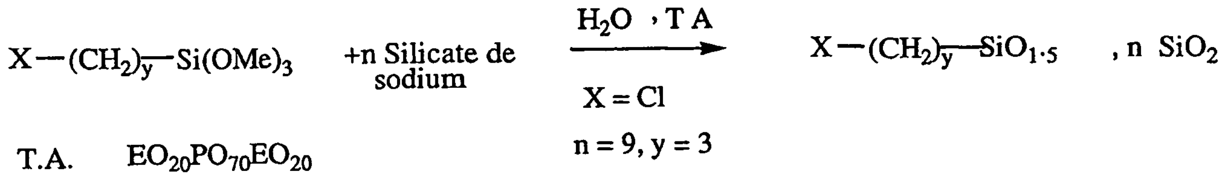


L'émulsion laiteuse comportant le mélange tensioactif, le (3-chloropropyl) triméthoxy silane et le silicate de sodium, est transformée en microémulsion, en portant le pH de la solution à 3, par addition d'une solution aqueuse d'acide chlorhydrique et en chauffant légèrement le mélange, jusqu'à ce que la solution soit parfaitement limpide. On ajoute ensuite, du fluorure de sodium qui provoque la précipitation du solide contenant le tensioactif. Ce dernier est éliminé par extraction au reflux de l'éthanol.

Dans l'exposé suivant, les matériaux sont dénommés de la façon suivante: $\mathbf{M_A}$ indique que le matériau a été préparé avec du TERGITOL™ **15S12** et $\mathbf{M_B}$ indique que le matériau a été préparé avec le co-polymère bloc $EO_{20}$ $PO_{70}$ $EO_{20}$. Cette lettre indicée est suivie du nom du groupement fonctionnel entre parenthèses. Ainsi les deux matériaux précédemment décrits seront notés **$\mathbf{M_A}$(Cl)** et **$\mathbf{M_B}$(Cl).**

## b - Exemples de préparation

**1**. Préparation de

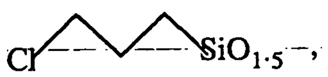

9 $SiO_2$ [$M_B$(Cl)]

Une solution de tensioactif est préparée, en mélangeant 2,0 g (0.34 mmol) de co-polymère blocs $EO_{20}$ $PO_{70}$ $EO_{20}$, 70 $cm^3$ d'eau et 1 $cm^3$ d'une solution d'acide sulfurique (4N). La solution est agitée jusqu'à dissolution complète du tensioactif (environ une heure). A cette solution transparente, on ajoute 0,9 g (4,5 mmol) de (3 - chloropropyl) triméthoxysilane. Le mélange résultant est agité pendant 5 minutes à température ambiante. On observe alors la formation d'une solution transparente. Cette nouvelle solution est versée sur un mélange de 59 $cm^3$ d'une solution aqueuse de silicate de sodium à 4,1% de $SiO_2$ et de 1,5 $cm^3$ d'acide sulfurique pur. Un précipité blanc se forme immédiatement. Le mélange réactionnel est porté à reflux pendant 3 jours. Après filtration, le solide obtenu est lavé à l'eau (2 x 100 $cm^3$). Le tensioactif est ensuite complètement éliminé du solide par extraction au reflux de l'éthanol à 95 % pendant 24 heures à l'aide d'un Soxhlet. L'extraction terminée, le solide est filtré puis lavé (2 x 20 $cm^3$ d'éthanol, puis 2 x 20 $cm^3$ d'acétone et 2 x 20 $cm^3$ d'éther). Après séchage sous vide à 120°C pendant 12 heures, on obtient quantitativement (3.18 g) le matériau hybride sous forme d'une poudre blanche.
Analyse : Si / Cl calculé : 10 ; Si /Cl trouvé 12,7 ;

Les mesures d'adsorption - désorption de l'azote à 77 K, effectuées sur le solide obtenu, mettent en évidence son caractère mésoporeux, avec un diamètre moyen de pores (dp) égal à 65 Å ($10^{-10}$ m) et une surface spécifique BET de 650 $m^2$/g.

Le diagramme de poudre de rayons X comporte un pic de diffraction [a = 107 Å ($10^{-10}$ m)], correspondant au plan "$d_{100}$" qui n'existe pas sur le solide préparé en l'absence de tensioactif.

## II - Ancrage de polyazamacrocycles

## a - Principe

A partir des matériaux comportant les groupements fonctionnels chloro, il est possible d'ancrer à l'intérieur des pores un grand nombre de molécules chélatantes telles que les polyazamacrocycles. Un seul équivalent de cyclame suffit pour avoir un ancrage quantitatif :

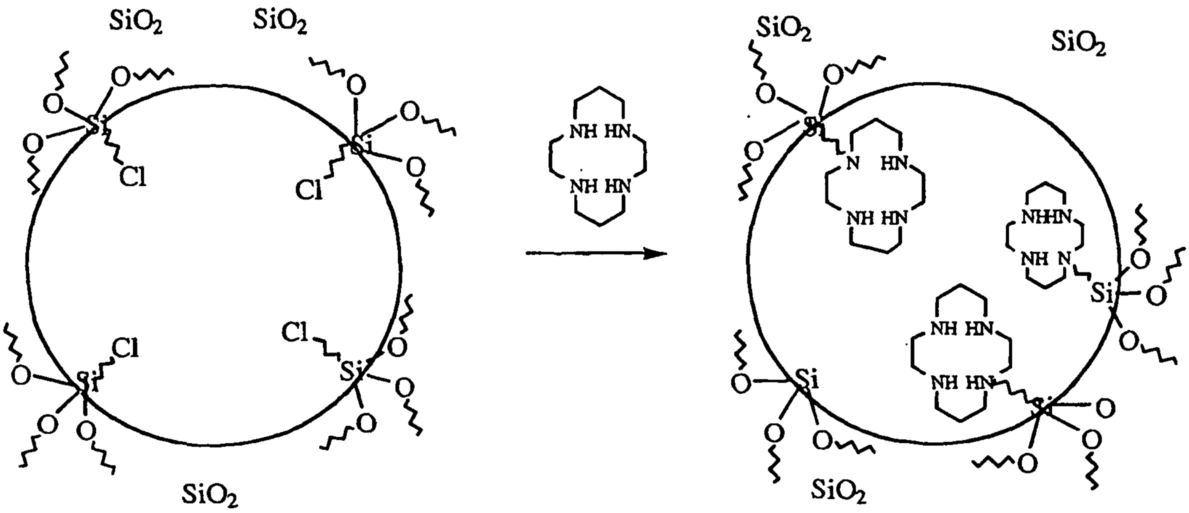

La méthode est généralisable à tous ligands chélatants portant au moins un atome d'azote susceptible de réagir avec la fonction chloro. Elle peut être appliquée avantageusement aux ligands cités plus hauts dans la description qu'il s'agisse de polyazacycloalcanes, de porphyrines ou de polyamines aliphatiques.

<u>**b - Exemples d'ancrage**</u>

<u>**1** - Ancrage du cyclame sur $M_B$(Cl) [$M_B$(cycl)].</u>

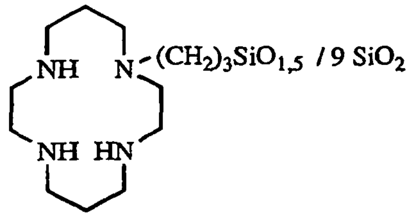

Dans un ballon de 500 $cm^3$, on porte au reflux 0.626 g de cyclame (3.13 mmol) et 125 $cm^3$ d'acétonitrile. Après environ 30 minutes de reflux, une grande partie du cyclame est solubilisée ; on ajoute alors 0.678 g de triéthylamine et 1.5 g de $M_B$(Cl), préparé comme décrit au paragraphe I précédent et on laisse le mélange au reflux pendant 48 heures. Le solide hybride est ensuite récupéré par filtration, de la solution chaude de façon à éviter la précipitation de l'excès de cyclame, puis repris dans le chloroforme à chaud 3 fois 5 minutes sous agitation (3 x 30 $cm^3$) puis 5 fois avec 30 $cm^3$ de méthanol à chaud. Après lavage à l'acétone et à l'éther et séchage à l'étuve sous vide 12 h à 120°C, on obtient le produit recherché.

Le dosage conductimétrique de l'excès de cyclame par une solution titrée de $CuBr_2$ fait apparaître que l'ancrage du cyclame est réalisé à 100 %.

$S_{BET}$ = 660 $m^2.g^{-1}$ ; dp = 63 Å ; RX, a = 107 Å.

<u>**2** - Ancrage du 5 - azanonan - 1, 9 - diamine sur $M_B$(Cl) [$M_B$(7)]</u>

Dans un ballon de 100 $cm^3$, on introduit 40 $cm^3$ d'acétonitrile, 0.5 g de $M_B$(Cl), 2 équivalents de triéthylamine et 10 équivalents de 5 - aza nonane - 1, 9 - diamine. Le mélange réactionnel est porté au reflux pendant 5 heures, puis le solide est filtré sur fritté n°3 et lavé 3 fois avec 20 $cm^3$ d'éthanol et 1 fois avec 10 $cm^3$ d'éther. Après séchage pendant 12 heures à 120°C sous une pression 10 mm de mercure, on obtient le produit recherché <u>$M_B$(7)</u>. Les résultats de l'analyse élémentaire font apparaître qu'il contient 0,77 $mmol.g^{-1}$ de triamine greffée.

| | C % | H % | N % |
|---|---|---|---|
| calculés | 14,1 | [illegible] | [illegible] |
| trouvés | 11,92 | [illegible] | [illegible] |

$S_{BET}$ = 259 $m^2.g^{-1}$, dp = 59 Å.

3 - Ancrage du 5, 8 - diazadodécan -1, 12 - diamine sur $M_B$(Cl) [$M_B$(9)]

Le matériau $M_B$(9) est obtenu selon le même mode opératoire que le matériau $M_B$(7) à partir de 0.5 g de $M_B$ (Cl) et du 5, 8 - diazadodécan -1, 12 - diamine. Les résultats de l'analyse élémentaire font apparaître qu'il contient 0. 68 $mmol.g^{-1}$ de tétraamine greffée.

| | C% | H% | N% |
|---|---|---|---|
| calculés | [illegible] | [illegible] | [illegible] |
| trouvés | [illegible] | [illegible] | [illegible] |

$S_{BET}$ = 133 $m^2g^{-1}$ , dp = 66 Å

**III - Complexation de sels métalliques**

**1** - Complexation de $CuCl_2$ sur le matériau $M_B$(cycl) [$M_B$(cycl-Cu)]

1 g du matériau $M_B$(cycl) (1.2 mmol) est mis sous argon dans un Schlenk de 70 $cm^3$. On y ajoute 20 $cm^3$ d'éthanol anhydre. Dans un second Schlenk de 70 $cm^3$, 228 mg de chlorure de cuivre ($CuCl_2$) (1.4 équivalents de sel par cyclame), sont dissous dans 40 $cm^3$ d'éthanol anhydre. Cette solution est versée sur la suspension de solide dans l'éthanol. Le mélange réactionnel est laissé au reflux pendant 24 heures. Le solide est ensuite filtré sous argon, lavé 3 fois avec 20 $cm^3$ d'éthanol, 3 fois avec 20 $cm^3$ d'acétone puis avec 3 fois 20 $cm^3$ d'éther anhydre.

Le dosage conductimétrique du chlorure de cuivre restant dans le filtrat par une solution titrée de cyclame, fait apparaître que la complexation est réalisée à 88%. $S_{BET}$ = 515 $m^2.g^{-1}$ ; dp = 44 Å.

**2 -** Complexation de $CuCl_2$ sur le matériau $M_B$(7) [$M_B$(7-Cu)]

Dans un ballon de 100 $cm^3$ on introduit 0,3 g de $M_B$(7), 2 équivalents de $CuCl_2$, 2 $H_2O$ et 20 $cm^3$ d'éthanol. Le mélange réactionnel est laissé sous agitation 12 heures à température ambiante. Il est ensuite filtré à l'air. Le solide obtenu est lavé 3 fois avec 10 $cm^3$ d'éthanol puis séché sous une pression de 3 Torrs pendant 1 h à température ambiante.

Le dosage du cuivre par fluorescence X fait apparaître que le composé obtenu contient 0,410 $mmol.g^{-1}$ de cuivre. $S_{BET}$ = 230 $m^2.g^{-1}$ ; dp = 58 Å.

3 - Complexation de $CuCl_2$ sur le matériau $M_B$(9) [$M_B$(9-Cu)]

La complexation de $CuCl_2$ sur le matériau $M_B$(9) a été réalisée selon le même mode opératoire que la complexation de $CuCl_2$ sur $M_B$(7).

Le dosage du cuivre par fluorescence X fait apparaître que le composé obtenu contient 0,377 $mmol.g^{-1}$ de cuivre. $S_{BET}$ = 119 $m^2.g^{-1}$ ; dp = 64 Å.

**IV - Fixation de l'oxygène sur le complexe**

Les mesures d'adsorption de $O_2$ par les matériaux **$M_B$(7-Cu)** et **$M_B$(9-Cu)** ont été réalisées à 21 °C, sur un appareil MICROMERITICS ASAP™ 2010. Les données expérimentales obtenues ont été traitées par un ajustement non linéaire, suivant la loi de type Langmuir : $V = V_mKP/(1+KP)$. Dans tous les cas, les résultats indiquent la nécessité d'utiliser 1 isotherme de type Langmuir pour rendre compte du phénomène de chimisorption et 1 isotherme de type Henry pour rendre compte de la physisorption.

A titre d'exemple, la fixation de l'oxygène sur les matériaux **$M_B$(7-Cu)** et **$M_B$(9-Cu)** est décrite.

Les solides ont été dégazés 12 h à 120°C sous $10^{-3}$ Torr avant adsorption de l'azote ou l'oxygène. Les résultats sont reportés dans le tableau ci-après et les isothermes d'adsorption de l'oxygène sur ces matériaux apparaissent sur les figures 1 et 2.

Il ressort de ce tableau que l'affinité du matériau $M_B$(7-Cu) pour l'oxygène est exceptionnelle, puisque d'une part la pression partielle de dioxygène $(PO_2)_{1/2}$ est très faible et que d'autre part la fixation de dioxygène est réversible.

| Solide | cycle | $Vo_2$ ($cm^3.g^{-1}$) | $Vn_2$ ($cm^3.g^{-1}$) | $(Po_2)_{1/2}$ Torr | Rdt % (oxygénation) |
|---|---|---|---|---|---|
| | 1 | 2,1 | 0,94 | 0,37 | 21 |
| $M_B$(7-Cu) | 2 | 2,2 | | 0,51 | 22 |
| $M_B$(9-Cu) | 1 | 1,96 | 0,37 | 3,78 | 22 |

## Revendications

**1.** Procédé de préparation de matériaux hybrides organiques - inorganiques, à porosité et fonctionnalité contrôlée, comprenant :

Une étape (a) d'hydrolyse et de polycondensation d'un mélange d'au moins un composé de formule (I) :

$$Z\text{-}R_1\text{-}Si(OR)(OR')(OR'') \qquad (I)$$

dans laquelle :

Z représente soit un atome d'halogène choisi parmi les atomes de chlore; de brome ou d'iode, soit un groupement amino ou phosphino ;
R, R' et R", identiques ou différents, représentent chacun indépendamment les uns des autres, un radical alkyle comportant de un à quatre atomes de carbone,
$R_1$ représente un radical divalent dérivé d'une chaîne hydrocarbonée aliphatique saturée ou insaturée, comportant de 1 à 30 atomes de carbone, dans laquelle sont éventuellement intercalés, un ou plusieurs chaînons structuraux choisis parmi le groupe arylène ou les fragments -O-, -S-, -O-C(=O)-, -N($R_6$)-C(=O)- ou -N($R_6$)-, dans lesquels $R_6$ représente un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle;
avec au moins un silicate alcalin ou alcalino-terreux de (II) en une proportion molaire (I) / (II) = 1/ 9 en présence d'au moins un agent tensioactif non ionique en concentration micellaire, pour former une silice mésoporeuse représentée par la formule (III) :

$$Z\text{-}R_1\text{-}SiO_{1,5}\ 9\ SiO_2 \qquad (III),$$

ladite étape (a) étant suivie

d'une étape (b) d'ancrage, sur la silice mésoporeuse de formule (III), d'un équivalent d'un composé organique, représenté par (Δ)N-H, comprenant au moins un groupe -NH- susceptible de réagir avec la fonction Z de ladite silice mésoporeuse, pour former la silice mésoporeuse fonctionnalisée représentée par la formule (IV) :

$$(\Delta)N\text{-}R_1\text{-}SiO_{1,5},\ 9\ SiO_2 \qquad (IV),$$

l'étape (b) étant suivie d'une étape (c) de complexation d'un cation métallique d'un métal de transition, d'un métal mobile, d'un lanthamide, ou d'un actinide [SUPPORT, page 4, l. .9-10] par réaction de la silice mésoporeuse fonctionnalisée représentée par la formule (IV), avec un sel dudit cation pour former un complexe organométallique (V).

**2.** Procédé selon la revendication 1, où $R_1$ représente le radical divalent de formule ($R_{1a}$) :

$$-(CH_2)_o-(Q)_q-(CH_2)_r-(Ar)_s-(CH_2)_t-(U)_u-(CH_2)_v- \qquad (R_{1a}),$$

dans laquelle :

o, r, t et v, identiques ou différents, représentent indépendamment l'un de l'autre, un nombre entier supérieur ou égal à 0 et inférieur ou égal à 6,
Q et U, identiques ou différents représentent indépendamment l'un de l'autre, un atome d'oxygène, un atome de soufre ou un des groupes -O-C(=O)-, -C(=O)-O-, -NH-C(=O)-, -C(=O)-NH- ou -NH-,
q, s et u, identiques ou différents, représentent indépendamment l'un de l'autre un nombre entier supérieur ou égal à 0 et inférieur ou égal à 1,
Ar représente un radical arylène et notamment un radical phénylène, étant entendu que :

lorsque q est égal à 1, o est différent de 0,
lorsque q est égal à 1 et que u est égal à 0, la somme r + s + t + v est différente de 0,
lorsque u est égal à 1, v est différent de 0,
lorsque u est égal à 1 et que q est égal à 0, la somme o + r + s + t est différente de 0,
lorsque s est égal à 0, et que q et u sont chacun égaux à 1, la somme r + t est différente de 0, et
la somme o + r + t + v + est inférieure ou égale à 24.

3. Procédé selon la revendication 2, où $R_1$ représente un des radicaux divalents, $-(CH_2)_x-$, dans lequel x est compris entre 3 et 20 et est de préférence entre 3 et 6 inclus ou un des radicaux :

$$-CH_2-CH(OH)-CH_2-O-(CH_2)_3- \text{ ou } -CH_2-(1,4-C_6H_4)-CH_2-NH-(CH_2)_3-.$$

4. Procédé selon l'une quelconque des revendications 1 à 3, où le cation métallique est choisi parmi les cations du fer, du cobalt, de l'europium, de l'uranium, du nickel, du manganèse, du cuivre, du chrome, du zinc, de l'argent, du cadmium, du plomb, du mercure, de l'or, du platine, du palladium, de l'uranium, du cérium ou du gadolinium.

5. Procédé selon l'une quelconque des revendications 1 à 4, où le sel de cation métallique est choisi parmi le chlorure, le bromure, l'iodure, le fluorure, le sulfate, le tétrafluoroborate ou le nitrate dudit cation.

6. Procédé tel que défini à l'une quelconque des revendications 1 à 5, où le composé (Δ)NH est choisi parmi les polyazacycloalcanes, les dérivés de porphyrines ou les polyamines aliphatiques.

7. Procédé tel que défini à l'une quelconque des revendication 1 à 6, où le composé (Δ)NH est choisi parmi les triazacycloalcanes et, plus particulièrement le. 1, 4, 7 - triazacyclononane, le 1, 4, 8 - triazacyclodécane ou le 1, 5 , 9 - triazacyclododécane, les tétraazacycloalcanes et, plus particulièrement le 1, 4, 7, 10 - tétraazacyclododécane (cyclène), le 1, 4, 7, 10 - tétrazacyclotridécane, le 1, 4, 7, 11 - tétraazacyclotétradécane, le 1, 4, 8, 11 - tétraazacyclotétradécane (ou cyclame), le 1, 4, 8 - triméthyl 1, 4, 8, 11 - tétraazacyclotétradécane, le 1, 4, 8, 12 - tétraazacyclopentadécane, le 1, 5, 9, 13 - tétraazacyclohexadécane, le 1, 5, 10, 14 - tétraazacyclooctadécane, le 1 - méthyl 1, 4, 8, 11 - tétraazacyclotétradécane, le 6 - dodécyl 1, 4, 8, 11 - tétraazacyclotétradécane, le 3 - dodécyl 1, 5, 9, 13 - tétraazacyclohexadécane, le 3 - dodécyl 1, 5, 10, 14 - tétraazacyclooctadécane, le 5, 5, 7, 12, 12, 14 - hexaméthyl 1, 4, 8, 11 - tétraazacyclotétradécane, le 1 - benzyl 1, 4, 8, 11 - tétraazacyclotétradécane, le 1 - [(2 - pyridyl) méthyl] 1, 4, 8, 11 - tétraazacyclotétradécane, le 1 - [(3 - pyridyl) méthyl] 1, 4, 8, 11 - tétraazacyclotétradécane ou le 1, 4 - dibenzyl 1, 4, 8, 11 - tétraazacyclotétradécane, les pentaazacycloalcanes et, plus particulièrement le 1, 4, 7, 10, 13 - pentaazacydopentadécane, le 4, 7,11,15 - pentaazacyclooctadécane, le 1, 5, 9, 13, 17 - pentaazacyclooctadécane ou le 1, 4, 7, 10 - tétraéthyl 1, 4, 7, 10, 13 -pentaazacyclopentadécane, les hexaazacycloalcanes et, plus particuiièrement le 1, 4, 7, 10, 13, 16 - hexaazacyclooctadécane, le 1, 5, 9, 13, 17, 20 - hexaazacyclotétracosane ou le 1, 4, 7, 10, 13 - pentaéthyl 1, 4, 7, 10, 13, 16 - hexaazacyclooctadécane, les octaazacycloalcanes et, plus particulièrement le 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 - octaazacyclooctacosane, le 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 octaazacyclooctacosane ou le 6, 6, 13, 13, 20, 20, 27, 27 - octaméthyl 1, 4, 8, 11, 15, 18, 22, 25 - octaazacyclooctacosane - 2, 3, 16, 17 - tétraone, les hexadécaazacycloalcanes et, plus particulièrement le 1, 4, 8, 11, 15, 18, 22, 25, 29, 32, 36, 39, 43, 46, 50, 53 - hexadécaazacyclohexapentacontane, le 1, 4, 7, 10, 13, 16, 19, 22, 25, 28, 31. 34, 37, 40, 43, 46 - hexadécaazacyclooctatétracontane, le 1, 4, 7, 10, 13, 16, 19, 22, 25, 28, 31, 34, 37, 40, 43, 46 - hexadécaazacyclooctatétracontane - 2, 3, 14, 15, 26, 27, 38, 39 - octaone, le 1, 4, 8, 11, 15, 18, 22, 25, 29, 32, 36, 39, 43, 46, 50, 53 - hexadécaazacyclohexapentacontane - 2, 3, 16, 17, 30, 31, 44, 45 - octaone ou le 1, 4, 7, 10, 13, 16, 19, 22, 25, 28, 31, 34, 37, 40, 43, 46 - hexadécaazacyclooctatétracontane

- 2, 3, 14, 15, 26, 27, 38, 39 - octaone.

8. Procédé tel que défini à l'une quelconque des revendications 1 à 6, où le composé (Δ)NH est un dérivé de la porphyrine choisi parmi le [4-(2,8,13,17-tétraethyl-3,7,12,18-tétramethyl-porphyrin-5-yl)-phénylamine], le [4-(2,8,13,17-tétraethyl-3,7,12,18-tétramethyl-porphyrin-5-yl)-benzylamine], le [4-(15-phényl-porphyrin-5-yl)-phénylamine], le [4-(15-phényl-porphyrin-5-yl)-benzylamine], le [4-(10,15,20-triphényl-porphyrin-5-yl)-phénylamine], ou le [4-(10,15,20-triphényl-porphyrin-5-yl)-benzylamine].

9. Procédé tel que défini à l'une quelconque des revendication 1 à 6, où le composé (Δ)NH est choisi parmi les triazaalcanes et, plus particulièrement le 4 - àzaheptan - 1, 7 - diamine, le 4 - azaoctan - 1, 8 - diamine ou le 5 - azanonan - 1, 9 - diamine, les tétraazaalcanes et, plus particulièrement le 4, 7 - diazadécan - 1, 10 - diamine, le 4, 8 - diazaundécan - 1, 11 - diamine, le 5, 9 - diazadodécan -1, 12 - diamine, le 5, 8 - diazadodécan - 1, 12 - diamine, le 4, 8, diazadodécan -1, 12 - diamine, le 5, 9 - diazatridécan - 1, 13 - diamine, le 5, 10 - diazatétradécan - 1, 14 - diamine, le 6, 10 - diazapentadécan - 1, 15 - diamine, les pentaazaalcanes et, plus particulièrement le 1, 4, 7 - triazatridécan 1, 13 - diamine, le 4, 8, 12 - triazahexadécan - 1, 16 - diamine ou le 5, 8, 11- triazapentadécan - 1, 15 diamine ou encore les hexaazaalcanes et, plus particulièrement le 4, 7, 10, 13 - tétraazahexadécan -1, 16 -diamine ou le 5, 9, 13, 17 - tétraazaeicosan -1, 20 - diamine.

10. Complexe organométallique (V), susceptible d'être obtenu selon le procédé de l'une quelconque des revendications 1 à 9.

11. Complexe organometallique (V) obtenu par réaction d'une silice mésoporeuse fonctionnalisée de formule (IV) :

$$(\Delta)N\text{-}R_1\text{-}SiO_{1,5},\ 9\ SiO_2 \qquad (IV),$$

avec un cation métallique d'un métal de transition, d'un métal noble, d'un lanthanide ou d'un actinide, où : $R_1$ représente un radical divalent dérivé d'une chaîne hydrocarbonée aliphatique saturée ou insaturée, comportant de 1 à 30 atomes de carbone, dans laquelle sont éventuellement intercalés, un ou plusieurs chaînons structuraux choisis parmi le groupe arylène ou les fragments -O-, -S-, -O-C(=O)-, - $N(R_6)$-C(=O)- ou -$N(R_6)$-, dans lesquels $R_6$ représente un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle et (Δ)N-, représente le radical aminé monovalent, dérivé d'un composé organique comprenant au moins un groupe -NH-.,

12. Complexe (V), tel que défini à la revendication 11, ou $R_1$ représente le radical divalent de formule ($R_{1a}$) :

$$-(CH_2)_o-(Q)_q-(CH_2)_r-(Ar)_s-(CH_2)_t-(U)_u-(CH_2)_v- \qquad (R_{1a}),$$

dans laquelle :

o, r, t et v, identiques ou différents, représentent indépendamment l'un de l'autre, un nombre entier supérieur ou égal à 0 et inférieur ou égal à 6,
Q et U, identiques ou différents représentent indépendamment l'un de l'autre, un atome d'oxygène, un atome de soufre ou un des groupes -O-C(=O)-, -C(=O)-O-, -NH-C(=O)-, -C(=O)-NH- ou -NH-,
q, s et u, identiques ou différents, représentent indépendamment l'un de l'autre un nombre entier supérieur ou égal à 0 et inférieur ou égal à 1,
Ar représente un radical arylène et notamment un radical phénylène, étant entendu que :

lorsque q est égal à 1, o est différent de 0,
lorsque q est égal à 1 et que u est égal à 0, la somme r + s + t + v est différente de 0,
lorsque u est égal à 1, v est différent de 0,
lorsque u est égal à 1 et que q est égal à 0, la somme o + r + s + t est différente de 0,
lorsque s est égal à 0, et que q et u sont chacun égaux à 1, la somme r + t est différente de 0, et
la somme o + r + t + v + est inférieure ou égale à 24.

13. Complexe (V), tels que défini à la revendication 12, dans lesquels $R_1$ représente un des radicaux divalents, -$(CH_2)_x$-, dans lequel x est compris entre 3 et 20 et est de préférence entre 3 et 6 inclus ou un des radicaux :

$-CH_2-CH(OH)-CH_2-O-(CH_2)_3-$ ou $-CH_2-(1,4-C_6H_4)-CH_2-NH-(CH_2)_3-$.

**14.** Complexe (V), tel que défini à l'une quelconque des revendications 11 à 13, dans lequel le cation métallique est choisi parmi les cations du fer, du cobalt, de l'europium, de l'uranium, du nickel, du manganèse, du cuivre, du chrome, du zinc, de l'argent, du cadmium, du plomb, du mercure, de l'or, du platine, du palladium, de l'uranium, du cérium ou du gadolinium.

**15.** Complexe (V), tel que défini à l'une quelconque des revendications 11 à 14, dans lequel le sel de cation métallique est choisi parmi le chlorure, le bromure, l'iodure, le fluorure, le sulfate, le tétrafluoroborate ou le nitrate dudit cation.

**16.** Complexe (V), tels que défini à l'une quelconque des revendications 11 à 15, dans lesquels le radical aminé monovalent Δ(N)- est dérivé d'un polyazacycloalcane, d'une porphyrine ou d'une polyamine aliphatique.

**17.** Complexe (V), tels que défini à l'une quelconque des revendications 11 à 16, dans lesquels le radical aminé monovalent Δ(N)- est dérivé d'un polyazacycloalcane choisi parmi les triazacycloalcanes et, plus particulièrement le 1, 4, 7 - triazacyclononane, le 1, 4, 8 - triazacyclodécane ou le 1, 5 , 9 - triazacyclododécane, les tétraazacycloalcanes et, plus particulièrement le 1, 4, 7, 10 - tétraazacyclododécane (cyclène), le 1, 4, 7, 10 - tétrazacyclotridécane, le 1, 4, 7, 11 - tétraazacyclotétradécane, le 1, 4, 8, 11 - tétraazacyclotétradécane (ou cyclame), le 1, 4, 8 - triméthyl 1, 4, 8, 11 - tétraazacyclotétradécane, le 1, 4, 8, 12 - tétraazacyclopentadécane, le 1, 5, 9, 13 - tétraazacyclohexadécane, le 1, 5, 10, 14 - tétraazacyclooctadécane, le 1 - méthyl 1, 4, 8, 11 - tétraazacyclotétradécane, le 6 - dodécyl 1, 4, 8, 11 - tétraazacyclotétradécane, le 3 - dodécyl 1, 5, 9, 13 - tétraazacyclohexadécane, le 3 - dodécyl 1, 5, 10, 14 - tétraazacyclooctadécane, le 5, 5, 7, 12, 12, 14 - hexaméthyl 1, 4, 8, 11 - tétraazacyclotétradécane, le 1 - benzyl 1, 4, 8, 11 - tétraazacyclotétradécane, le 1 - [(2 - pyridyl) méthyl] 1, 4, 8, 11 - tétraazacyclotétradécane, le 1 - [(3 - pyridyl) méthyl] 1, 4, 8, 11 - tétraazacyclotétradécane ou le 1, 4 - dibenzyl 1, 4, 8, 11 - tétraazacyclotétradécane, les pentaazacycloalcanes et, plus particulièrement le 1, 4, 7, 10, 13 - pentaazacyclopentadécane, le 4, 7, 11, 15 - pentaazacyclooctadécane, le 1, 5, 9, 13, 17 - pentaazacyclooctadécane ou le 1, 4, 7, 10 - tétraéthyl 1, 4, 7, 10, 13 -pentaazacyclopentadécane, les hexaazacycloalcanes et, plus particulièrement le 1, 4, 7, 10, 13, 16 - hexaazacyclooctadécane, le 1, 5, 9, 13, 17, 20 - hexaazacyclotétracosane ou le 1, 4, 7, 10, 13 - pentaéthyl 1, 4, 7, 10, 13, 16 - hexaazacyclooctadécane, les octaazacycloalcanes et, plus particulièrement le 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 - octaazacyclooctacosane, le 6, 6, 13, 13, 20, 20, 27, 27 - octaméthyl 1, 4, 8,11,15,18, 22, 25 - octaazacyclooctacosane, le 1, 4, 8, 11, 15, 18, 22, 25 - octaazacyclooctacosane, le 6, 6, 13, 13, 20, 20, 27, 27 - octaméthyl 1, 4, 8, 11, 15, 18, 22, 25 octaazacyclooctacosane ou le 6, 6,13,13, 20, 20, 27, 27 - octaméthyl 1, 4, 8, 11, 15, 18, 22, 25 - octaazacyclooctacosane - 2, 3, 16, 17 - tétraone, les hexadécaazacycloalcanes et, plus particulièrement le 1, 4, 8, 11, 15, 18, 22, 25, 29, 32, 36, 39, 43, 46, 50, 53 - hexadécaazacyclohexapentacontane, le 1, 4, 7, 10, 13, 16, 19, 22, 25, 28, 31, 34, 37, 40, 43, 46 - hexadécaazacyclooctatétracontane, le 1, 4, 7, 10, 13, 16, 19, 22, 25, 28, 31, 34, 37, 40, 43, 46 - hexadécaazacyclooctatétracontane - 2, 3, 14, 15, 26, 27, 38, 39 - octaone, le 1, 4, 8, 11, 15, 18, 22, 25, 29, 32, 36, 39, 43, 46, 50, 53 - hexadécaazacyclohexapentacontane - 2, 3, 16, 17, 30, 31, 44, 45 - octaone ou le 1, 4, 7, 10, 13, 16, 19, 22, 25, 28, 31, 34, 37, 40, 43, 46 - hexadécaazacyclooctatétracontane - 2, 3, 14, 15, 26, 27, 38, 39 - octaone.

**18.** Complexe (V), tels que défini à l'une quelconque des revendications 11 à 16, dans lesquels le radical aminé monovalent Δ(N)- est dérivé d'un dérivé de porphyrine choisi parmi les dérivés du [4-(2,8,13,17-Tetraethyl-3,7,12,18-tetramethyl-porphyrin-5-yl)-phenylamine], du [4-(2,8,13,17-Tetraethyl-3,7,12,18-tetramethyl-porphyrin-5-yl)-benzylamine], du [4-(15-Phenyl-porphyrin-5-yl)-phenylamine], du [4-(15-Phenyl-porphyrin-5-yl)-benzylamine], du [4-(10,15,20-Triphenyl-porphyrin-5-yl)-phenylamine] ou du [4-(10,15,20-Triphenyl-porphyrin-5-yl)-benzylamine].

**19.** Complexe (V), tels que défini à l'une quelconque des revendications 11 à 16, dans lesquels le radical aminé monovalent Δ(N)- est dérivé d'une polyamine aliphatique choisie parmi les triazaalcanes et, plus particulièrement le 4 - azaheptan - 1, 7 - diamine, le 4 - azaoctan - 1, 8 - diamine ou le 5 - azanonan - 1, 9 - diamine, les tétraazaalcanes et, plus particulièrement le 4, 7 - diazadécan - 1, 10 - diamine, le 4, 8 - diazaundécan - 1, 11 - diamine, le 5, 9 - diazadodécan -1, 12 - diamine, le 5, 8 - diazadodécan - 1, 12 - diamine, le 4, 8, diazadodécan -1, 12 - diamine, le 5, 9 - diazatridécan - 1, 13 - diamine, le 5, 10 - diazatétradécan - 1, 14 - diamine, le 6, 10 - diazapentadécan - 1, 15 - diamine, les pentaazaalcanes et, plus particulièrement le 1, 4, 7 - triazatridécan 1, 13 - diamine, le 4, 8, 12 - triazahexadécan - 1, 16 - diamine ou le 5, 8, 11 - triazapentadécan - 1, 15 diamine ou encore les hexaazaalcanes et, plus particulièrement le 4, 7, 10, 13 - tétraazahexadécan -1, 16 -diamine ou le 5, 9, 13, 17 - tétraazaeicosan - 1, 20 - diamine.

**20.** Utilisation du complexe (V), tel que défini à l'une quelconque des revendications 10 à 19, pour séparer un gaz déterminé d'un mélange de gaz.

**21.** Utilisation telle que définie à la revendication 20, appliquée à la séparation de l'oxygène de l'air, soit pour produire de l'oxygène pur, soit pour éliminer l'oxygène de l'air.

**22.** Utilisation du complexe (V) tel que défini à l'une quelconque des revendications 10 à 19, en catalyse hétérogène, pour la dépollution des effluents, pour la purification, l'activation et le stockage des gaz, pour l'obtention de matériaux photoluminescents et de matériaux à propriétés magnétique ou électrique.

**23.** Silice mésoporeuse fonctionalisée utile à titre d'intermédiaire de synthèse du complexe (V) des revendications 10 à 19, répondant à la formule (IV) suivante:

$$(\Delta)N\text{-}R_1\text{-}SiO_{1,5},\ 9\ SiO_2 \qquad (IV),$$

dans laquelle $R_1$ représente un radical divalent dérivé d'une chaîne hydrocarbonée aliphatique saturée ou insaturée, comportant de 1 à 30 atomes de carbone, dans laquelle sont éventuellement intercalés, un ou plusieurs chaînons structuraux choisis parmi le groupe arylène ou les fragments -O-, -S-, -O-C(=O)-, -N($R_6$)-C(=O)- ou -N($R_6$)-, dans lesquels $R_6$ représente un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle et
(Δ)N-, représente le radical aminé monovalent, dérivé d'un composé organique comprenant au moins un groupe -NH-.

**24.** Silice mésoporeuse fonctionnalisée (IV) selon la revendication 23, où $R_1$ est tel que défini dans l'une quelconque des revendications 12 ou 13 et/ou dans laquelle (Δ)N- est telle que défini dans l'une quelconque des revendications 17 à 19.

**25.** Procédé de préparation de la silice mésoporeuse fonctionnalisée de la revendication 23 ou 24, comprenant :

Une étape (a) d'hydrolyse et de polycondensation d'un mélange d'au moins un composé de formule (I) :

$$Z\text{-}R_1\text{-}Si(OR)(OR')(OR'') \qquad (I)$$

dans laquelle :

Z représente soit un atome d'halogène choisi parmi les atomes de chlore; de brome ou d'iode, soit un groupement amino ou phosphino ;
R, R' et R", identiques ou différents, représentent chacun indépendamment les uns des autres, un radical alkyle comportant de un à quatre atomes de carbone,
$R_1$ représente un radical divalent dérivé d'une chaîne hydrocarbonée aliphatique saturée ou insaturée, comportant de 1 à 30 atomes de carbone, dans laquelle sont éventuellement intercalés, un ou plusieurs chaînons structuraux choisis parmi le groupe arylène ou les fragments -O-, -S-, -O-C(=O)-, -N($R_6$)-C(=O)- ou -N($R_6$)-, dans lesquels $R_6$ représente un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle;
avec au moins un silicate alcalin ou alcalino-terreux de (II) en une proportion molaire (I) / (II) = 1/ 9 en présence d'au moins un agent tensioactif non ionique en concentration micellaire, pour former une silice mésoporeuse représentée par la formule (III) :

$$Z\text{-}R_1\text{-}SiO_{1,5}\ 9\ SiO_2 \qquad (III),$$

ladite étape (a) étant suivie

d'une étape (b) d'ancrage, sur la silice mésoporeuse de formule (III), d'un équivalent d'un composé organique, représenté par (Δ)N-H, comprenant au moins un groupe -NH- susceptible de réagir avec la fonction Z de ladite

silice mésopoporeuse, pour former la silice mésoporeuse fonctionalisée de formule IV.

## Claims

1. Process for the preparation of hybrid organic-inorganic materials of controlled porosity and functionality, comprising:

a step (a) of hydrolysis and polycondensation of a mixture of at least one compound of formula (I):

$$Z\text{-}R_1\text{-}Si(OR)(OR')(OR'') \qquad (I),$$

wherein:

Z represents either a halogen atom selected from chlorine, bromine and iodine atoms or an amino or phosphino group,
R, R' and R", which are the same or different, represent, each independently of the others, an alkyl radical containing from one to four carbon atoms,
$R_1$ represents a divalent radical derived from a saturated or unsaturated aliphatic hydrocarbon chain containing from 1 to 30 carbon atoms in which there are optionally inserted one or more structural links selected from an arylene group and the moieties -O-, -S-, -O-C(=O)-, -$N(R_6)$-C(=O)- and -$N(R_6)$-, wherein $R_6$ represents a hydrogen atom, an aliphatic hydrocarbon radical containing from 1 to 6 carbon atoms, a benzyl radical or a phenethyl radical, said chain being unsubstituted or substituted by one or more radicals selected from halogen atoms, a hydroxy group, alkyl radicals containing from 1 to 4 carbon atoms and benzyl and phenethyl radicals,
with at least one alkali metal silicate or alkaline earth metal silicate (II) in a molar proportion of (I)/(II) = 1/9 in the presence of at least one nonionic surface-active agent at a micellar concentration to form a mesoporous silica represented by formula (III):

$$Z\text{-}R_1\text{-}SiO_{1.5}\ 9\ SiO_2 \qquad (III),$$

said step (a) being followed by

a step (b) of anchoring, to the mesoporous silica of formula (III), one equivalent of an organic compound, represented by (Δ)N-H, comprising at least one group - NH- capable of reacting with the Z function of said mesoporous silica, to form the functionalised mesoporous silica represented by formula (IV):

$$(\Delta)N\text{-}R_1\text{-}SiO_{1,5},\ 9\ SiO_2 \qquad (IV),$$

step (b) being followed by a step (c) of complexing a metallic cation of a transition metal, of a noble metal, of a lanthanide or of an actinide by reaction of the functionalised mesoporous silica represented by formula (IV) with a salt of said cation to form an organometallic complex (V).

2. Process according to claim 1, wherein $R_1$ represents the divalent radical of formula ($R_{1a}$):

$$-(CH_2)_o\text{-}(Q)_q\text{-}(CH_2)_r\text{-}(Ar)_s\text{-}(CH_2)_t\text{-}(U)_u\text{-}(CH_2)_v\text{-} \qquad (R_{1a}),$$

wherein:

o, r, t and v, which are the same or different, represent, independently of one another, a whole number greater than or equal to 0 and less than or equal to 6,
Q and U, which are the same or different, represent, independently of one another, an oxygen atom, a sulphur atom or one of the groups -O-C(=O)-, -C(=O)-O-, -NH-C(=O)-, -C(=O)-NH- or -NH-,
q, s and u, which are the same or different, represent, independently of one another, a whole number greater than or equal to 0 and less than or equal to 1,
Ar represents an arylene radical, especially a phenylene radical, it being understood that:

when q is equal to 1, o is other than 0,
when q is equal to 1 and u is equal to 0, the sum r + s + t + v is other than 0,
when u is equal to 1, v is other than 0,
when u is equal to 1 and q is equal to 0, the sum o + r + s + t is other than 0,
when s is equal to 0 and q and u are both equal to 1, the sum r + t is other than 0, and
the sum o + r + t + v + is less than or equal to 24.

**3.** Process according to claim 2, wherein $R_1$ represents a divalent radical $-(CH_2)_x-$, wherein x is between 3 and 20 inclusive and is preferably between 3 and 6 inclusive, or one of the radicals:

$$-CH_2-CH(OH)-CH_2-O-(CH_2)_3- \text{ or } -CH_2-(1,4-C_6H_4)-CH_2-NH-(CH_2)_3-.$$

**4.** Process according to any one of claims 1 to 3, wherein the metallic cation is selected from the cations of iron, cobalt, europium, uranium, nickel, manganese, copper, chromium, zinc, silver, cadmium, lead, mercury, gold, platinum, palladium, uranium, cerium and gadolinium.

**5.** Process according to any one of claims 1 to 4, wherein the salt of the metallic cation is selected from the chloride, bromide, iodide, fluoride, sulphate, tetrafluoroborate and nitrate of said cation.

**6.** Process as defined in any one of claims 1 to 5, wherein the compound (A)NH is selected from the polyazacycloalkanes, porphyrin derivatives and aliphatic polyamines.

**7.** Process as defined in any one of claims 1 to 6, wherein the compound (A)NH is selected from the triazacycloalkanes and more especiaiiy 1,4,7-triazacyclononane, 1,4,8-triazacyclodecane and 1,5,9-triazacyclododecane, the tetraazacycloalkanes and more especially 1,4,7,10-tetraazacyclododecane (cyclene), 1,4,7,10-tetraazacyclotridecane, 1,4,7,11-tetraazacyclotetradecane, 1,4,8,11-tetraazacyclotetradecane (or cyclam), 1,4,8-trimethyl 1,4,8,11-tetraazacyclotetradecane, 1,4,8,12-tetraazacyclopentadecane, 1,5,9,13-tetraazacyclohexadecane, 1,5,10,14-tetraazacyclooctadecane, 1-methyl 1,4,8,11-tetraazacyclotetradecane, 6-dodecyl 1,4,8,11-tetraazacyclotetradecane, 3-dodecyl 1,5,9,13-tetraazacyclohexadecane, 3-dodecyl 1,5,10,14-tetraazacyclooctadecane, 5,5,7,12,12,14-hexamethyl 1,4,8,11-tetraazacyclotetradecane, 1-benzyl 1,4,8,11-tetraazacyclotetradecane, 1-[(2-pyridyl)methyl] 1,4,8,11-tetraazacyclotetradecane, 1-[(3-pyridyl)methyl] 1,4,8,11-tetraazacyclotetradecane and 1,4-dibenzyl 1,4,8,11-tetraazacyclotetradecane, the pentaazacycloalkanes and more especially 1,4,7,10,13-pentaazacyclopentadecane, 4,7,11,15-pentaazacyclooctadecane, 1,5,9,13,17-pentaazacyclooctadecane and 1,4,7,10-tetraethyl 1,4,7,10,13-pentaazacyclopentadecane, the hexaazacycloalkanes and more especially 1,4,7,10,13,16-hexaazacyclooctadecane, 1,5,9,13,17,20-hexaazacyclotetracosane and 1,4,7,10,13-pentaethyl 1,4,7,10,13,16-hexaazacyclooctadecane, the octaazacycloalkanes and more especially 1,4,8,11,15,18,22,25-octaazacyclooctacosane, 6,6,13,13,20,20,27,27-octamethyl 1,4,8,11,15,18,22,25-octaazacyclooctacosane, 6,6,13,13,20,20,27,27-octamethyl 1,4,8,11,15,18,22,25-octaazacyclooctacosane, 1,4,8,11,15,18,22,25-octaazacyclooctacosane, 6,6,13,13,20, 20,27,27-octamethyl 1,4,8,11,15,18,22,25-octaazacyclooctacosane and 6,6,13,13,20,20,27,27-octamethyl 1,4,8,11,15,18,22,25-octaazacyclooctacosane-2,3,16,17-tetraone, and the hexadecaazacycloalkanes and more especially 1,4,8,11,15,18,22,25,29,32,36,39,43,46,50,53-hexadecaazacyclohexapentacontane, 1,4,7,10,13,16,19, 22,25,28,31,34,37,40,43,46-hexadecaazacyclooctatetracontane, 1,4,7,10,13,16,19,22,25,28,31,34,37,40,43,46-hexadecaazacyclooctatetracontane-2,3,14,15,26,27,38,39-octaone, 1,4,8,11,15,18,22,25,29,32,36, 39,43,46,50, 53-hexadecaazacyclohexapentacontane-2,3,16,17,30,31,44,45-octaone and 1,4,7,10,13,16,19,22,25,28,31,34, 37,40,43,46-hexadecaazacyclooctatetracontane-2,3,14,15,26,27,38,39-octaone.

**8.** Process as defined in any one of claims 1 to 6, wherein the compound (A)NH is a porphyrin derivative selected from [4-(2,8,13,17-tetraethyl-3,7,12,18-tetramethylporphyrin-5-yl)phenylamine], [4-(2,8,13,17-tetraethyl-3,7,12,18-tetramethylporphyrin-5-yl)benzylamine], [4-(15-phenyl-porphyrin-5-yl)phenylamine], [4-(15-phenyl-porphyrin-5-yl) benzylamine], [4-(10,15,20-triphenyl-porphyrin-5-yl)phenylamine and [4-(10,15,20-triphenyl-porphyrin-5-yl)benzylamine].

**9.** Process as defined in any one of claims 1 to 6, wherein the compound (Δ)NH is selected from the triazaalkanes and more especially 4-azaheptane-1,7-diamine, 4-azaoctane-1,8-diamine and 5-azanonane-1,9-diamine, the tetraazaalkanes and more especially 4,7-diazadecane-1,10-diamine, 4,8-diazaundecane-1,11-diamine, 5,9-diazadodecane-1,12-diamine, 5,8-diazadodecane-1,12-diamine, 4,8-diazadodecane-1,12-diamine, 5,9-diazatridecane-1,13-diamine, 5,10-diazatetradecane-1,14-diamine and 6,10-diazapentadecane-1,15-diamine, the pentaazaalkanes and more especially 1,4,7-triazatridecane-1,13-diamine, 4,8,12-triazahexadecane-1,16-diamine and 5,8,11-triazapentadecane-1,15-diamine, and also the hexaazaalkanes and more especially 4,7,10,13-tetraazahexadecane-1,16-diamine and 5,9,13,17-tetraazaicosane-1,20-diamine.

**10.** Organometallic complex (V) obtainable in accordance with the process of any one of claims 1 to 9.

**11.** Organometallic complex (V) obtained by reaction of a functionalised mesoporous silica of formula (IV):

$$(\Delta)N\text{-}R_1\text{-}SiO_{1.5},\ 9\ SiO_2 \qquad (IV),$$

with a metallic cation of a transition metal, of a noble metal, of a lanthanide or of an actinide, wherein:

$R_1$ represents a divalent radical derived from a saturated or unsaturated aliphatic hydrocarbon chain containing from 1 to 30 carbon atoms in which there are optionally inserted one or more structural links selected from an arylene group and the moieties -O-, -S-, -O-C(=O)-, -N($R_6$)-C(=O)- and -N($R_6$)-, wherein $R_6$ represents a hydrogen atom, an aliphatic hydrocarbon radical containing from 1 to 6 carbon atoms, a benzyl radical or a phenethyl radical, said chain being unsubstituted or substituted by one or more radicals selected from halogen atoms, a hydroxy group, alkyl radicals containing from 1 to 4 carbon atoms and benzyl and phenethyl radicals, and (Δ)N- represents a monovalent amine radical derived from an organic compound containing at least one -NH- group.

**12.** Complex (V) as defined in claim 11, wherein $R_1$ represents the divalent radical of formula ($R_{1a}$):

$$-(CH_2)_o-(Q)_q-(CH_2)_r-(Ar)_s-(CH_2)_t-(U)_u-(CH_2)_v- \qquad (R_{1a}),$$

wherein:

o, r, t and v, which are the same or different, represent, independently of one another, a whole number greater than or equal to 0 and less than or equal to 6,
Q and U, which are the same or different, represent, independently of one another, an oxygen atom, a sulphur atom or one of the groups -O-C(=O)-, -C(=O)-O-, -NH-C(=O)-, -C(=O)-NH- or -NH-,
q, s and u, which are the same or different, represent, independently of one another, a whole number greater than or equal to 0 and less than or equal to 1,
Ar represents an arylene radical, especially a phenylene radical, it being understood that:

when q is equal to 1, o is other than 0,
when q is equal to 1 and u is equal to 0, the sum r + s + t + v is other than 0, when u is equal to 1, v is other than 0,
when u is equal to 1 and q is equal to 0, the sum o + r + s + t is other than 0,
when s is equal to 0 and q and u are both equal to 1, the sum r + t is other than 0, and
the sum o + r + t + v + is less than or equal to 24.

**13.** Complex (V) as defined in claim 12, wherein $R_1$ represents a divalent radical $-(CH_2)_x-$, wherein x is between 3 and 20 inclusive and is preferably between 3 and 6 inclusive, or one of the radicals:

$$-CH_2-CH(OH)-CH_2-O-(CH_2)_3- \text{ or } -CH_2-(1,4-C_6H_4)-CH_2-NH-(CH_2)_3-.$$

**14.** Complex (V) as defined in any one of claims 11 to 13, wherein the metallic cation is selected from the cations of iron, cobalt, europium, uranium, nickel, manganese, copper, chromium, zinc, silver, cadmium, lead, mercury, gold, platinum, palladium, uranium, cerium and gadolinium.

**15.** Complex (V) as defined in any one of claims 11 to 14, wherein the salt of the metallic cation is selected from the chloride, bromide, iodide, fluoride, sulphate, tetrafluoroborate and nitrate of said cation.

**16.** Complex (V) as defined in any one of claims 11 to 15, wherein the monovalent amine radical Δ(N)- is derived from a polyazacycloalkane, a porphyrin or an aliphatic polyamine.

**17.** Complex (V) as defined in any one of claims 11 to 16, wherein the monovalent amine radical Δ(N)- is derived from a polyazacycloalkane selected from the triazacycloalkanes and more especially 1,4,7-triazacyclononane, 1,4,8-triazacyclodecane and 1,5,9-triazacyclododecane, the tetraazacycloalkanes and more especially 1,4,7,10-tetraazacyclododecane (cyclene), 1,4,7,10-tetraazacyclotridecane, 1,4,7,11-tetraazacyclotetradecane, 1,4,8,11-tetraazacyclotetradecane (or cyclam), 1,4,8-trimethyl 1,4,8,11-tetraazacyclotetradecane, 1,4,8,12-tetraazacyclopentadecane, 1,5,9,13-tetraazacyclohexadecane, 1,5,10,14-tetraazacyclooctadecane, 1-methyl 1,4,8,11-tetraazacyclotetradecane, 6-dodecyl 1,4,8,11-tetraazacyclotetradecane, 3-dodecyl 1,5,9,13-tetraazacyclohexadecane, 3-dodecyl 1,5,10,14-tetraazacyclooctadecane, 5,5,7,12,12,14-hexamethyl 1,4,8,11-tetraazacyclotetradecane, 1-benzyl 1,4,8,11-tetraazacyclotetradecane, 1-[(2-pyridyl)methyl] 1,4,8,11-tetraazacyclotetradecane, 1-[(3-pyridyl)methyl] 1,4,8,11-tetraazacyclotetradecane and 1,4-dibenzyl 1,4,8,11-tetraazacyclotetradecane, the pentaazacycloalkanes and more especially 1,4,7,10,13-pentaazacyclopentadecane, 4,7,11,15-pentaazacyclooctadecane, 1,5,9,13,17-pentaazacyclooctadecane and 1,4,7,10-tetraethyl 1,4,7,10,13-pentaazacyclopentadecane, the hexaazacycloalkanes and more especially 1,4,7,10,13,16-hexaazacyclooctadecane, 1,5,9,13, 17,20-hexaazacyclotetracosane and 1,4,7,10,13-pentaethyl 1,4,7,10,13,16-hexaazacyclooctadecane, the octaazacycloalkanes and more especially 1,4,8,11,15,18,22,25-octaazacyclooctacosane, 6,6,13,13,20,20,27,27-octamethyl 1,4,8,11,15,18,22,25-octaazacyclooctacosane, 6,6,13,13,20,20,27,27-octamethyl 1,4,8,11,15,18,22,25-octaazacyclooctacosane, 1,4,8,11,1 5,18,22,25-octaazacyclooctacosane, 6,6,13,13,20,20,27,27-octamethyl 1,4,8,11,15,18,22,25-octaazacyclooctacosane and 6,6,13,13,20,20,27,27-octamethyl 1,4,8,11,15,18,22,25-octaazacyclooctacosane-2,3,16,17-tetraone, and the hexadecaazacycloalkanes and more especially 1,4,8,11,15,18,22,25,29, 32,36,39,43,46,50,53-hexadecaazacyclohexapentacontane, 1,4,7,10,13,16,19,22,25,28,31,34,37,40,43,46-hexadecaazacyclooctatetracontane, 1,4,7,10,13,16,19,22,25,28,31,34,37,40,43,46-hexadecaazacyclooctatetracontane-2,3,14,15,26,27,38,39-octaone, 1,4,8,11,15,18,22,25,29, 32,36,39,43,46,50,53-hexadecaazacyclohexapentacontane-2,3,16,17,30,31, 44,45-octaone and 1,4,7,10,13,16,19,22,25,28,31,34,37,40,43,46-hexadecaazacyclooctatetracontane-2,3,14,15, 26,27,38,39-octaone.

**18.** Complex (V) as defined in any one of claims 11 to 16, wherein the monovalent amine radical A(N)- is derived from a porphyrin derivative selected from the derivatives of [4-(2,8,13,17-tetraethyl-3,7,12,18-tetramethyl-porphyrin-5-yl)-phenylamine], [4-(2,8,13,17-tetraethyl-3,7,12,18-tetramethyl-porphyrin-5-yl)-benzylamine], [4-(15-phenyl-porphyrin-5-yl)phenylamine], [4-(15-phenyl-porphyrin-5-yl)benzylamine], [4-(10,15,20-triphenyl-porphyrin-5-yl)phenylamine and [4-(10,15,20-triphenyl-porphyrin-5-yl)benzylamine].

**19.** Complex (V) as defined in any one of claims 11 to 16, wherein the monovalent amine radical Δ(N)- is derived from an aliphatic polyamine selected from the triazaalkanes and more especially 4-azaheptane-1,7-diamine, 4-azaoctane-1,8-diamine and 5-azanonane-1,9-diamine, the tetraazaalkanes and more especially 4,7-diazadecane-1,10-diamine, 4,8-diazaundecane-1,11-diamine, 5,9-diazadodecane-1,12-diamine, 5,8-diazadodecane-1,12-diamine, 4,8-diazadodecane-1,12-diamine, 5,9-diazatridecane-1,13-diamine, 5,10-diazatetradecane-1,14-diamine and 6,10-diazapentadecane-1,15-diamine, the pentaazaalkanes and more especially 1,4,7-triazatridecane-1,13-diamine, 4,8,12-triazahexadecane-1,16-diamine and 5,8,11-triazapentadecane-1,15-diamine, and also the hexaazaalkanes and more especially 4,7,10,13-tetraazahexadecane-1,16-diamine and 5,9,13,17-tetraazaicosane-1,20-diamine.

**20.** Use of the complex (V) as defined in any one of claims 10 to 19 for separating a particular gas from a mixture of gases.

**21.** Use as defined in claim 20, applied to the separation of oxygen from air, either for producing pure oxygen or for removing oxygen from air.

**22.** Use of the complex (V) as defined in any one of claims 10 to 19, in heterogeneous catalysis, for the decontamination of effluents, for the purification, activation and storage of gases, or for obtaining photoluminescent materials and materials having magnetic or electrical properties.

**23.** Functionalised mesoporous silica for use as synthesis intermediate of the complex (V) of claims 10 to 19, corresponding to the following formula (IV):

$$(\Delta)N\text{-}R_1\text{-}SiO_{1.5},\ 9\ SiO_2 \qquad (IV),$$

wherein $R_1$ represents a divalent radical derived from a saturated or unsaturated aliphatic hydrocarbon chain containing from 1 to 30 carbon atoms in which there are optionally inserted one or more structural links selected from an arylene group and the moieties -O-, -S-, -O-C(=O)-, -N($R_6$)-C(=O)- and -N($R_6$)-, wherein $R_6$ represents a hydrogen atom, an aliphatic hydrocarbon radical containing from 1 to 6 carbon atoms, a benzyl radical or a phenethyl radical, said chain being unsubstituted or substituted by one or more radicals selected from halogen atoms, a hydroxy group, alkyl radicals containing from 1 to 4 carbon atoms and benzyl and phenethyl radicals, and

(Δ)N- represents a monovalent amine radical derived from an organic compound containing at least one -NH- group.

**24.** Functionalised mesoporous silica (IV) according to claim 23, wherein $R_1$ is as defined in any one of claims 12 or 13 and/or wherein (Δ)N- is as defined in any one of claims 17 to 19.

**25.** Process for the preparation of the functionalised mesoporous silica of claim 23 or 24, comprising:

<u>a step (a)</u> of hydrolysis and polycondensation of a mixture of at least one compound of formula (I):

$$Z\text{-}R_1\text{-}Si(OR)(OR')(OR'') \qquad (I),$$

wherein:

Z represents either a halogen atom selected from chlorine, bromine and iodine atoms or an amino or phosphino group,
R, R' and R", which are the same or different, represent, each independently of the others, an alkyl radical containing from one to four carbon atoms,
$R_1$ represents a divalent radical derived from a saturated or unsaturated aliphatic hydrocarbon chain containing from 1 to 30 carbon atoms in which there are optionally inserted one or more structural links selected from an arylene group and the moieties -O-, -S-, -O-C(=O)-, -N($R_6$)-C(=O)- and -N($R_6$)-, wherein $R_6$ represents a hydrogen atom, an aliphatic hydrocarbon radical containing from 1 to 6 carbon atoms, a benzyl radical or a phenethyl radical, said chain being unsubstituted or substituted by one or more radicals selected from halogen atoms, a hydroxy group, alkyl radicals containing from 1 to 4 carbon atoms and benzyl and phenethyl radicals,
with at least one alkali metal silicate or alkaline earth metal silicate (II) in a molar proportion of (I)/(II) = 1/9 in the presence of at least one nonionic surface-active agent at a micellar concentration to form a mesoporous silica represented by formula (III):

$$Z\text{-}R_1\text{-}SiO_{1.5}\ 9\ SiO_2 \qquad (III),$$

said step (a) being followed by
<u>a step (b)</u> of anchoring, to the mesoporous silica of formula (III), one equivalent of an organic compound, represented by (Δ)N-H, comprising at least one group - NH- capable of reacting with the Z function of said mesoporous silica, to form the functionalised mesoporous silica of formula (IV).

## Patentansprüche

**1.** Verfahren zur Herstellung von hybriden organischanorganischen Materialien mit gesteuerter Funktionalität und Porosität, umfassend:

<u>einen Schritt (a)</u> der Hydrolyse und der Polykondensation einer Mischung von mindestens einer Verbindung der Formel (I) :

$$Z\text{-}R_1\text{-}Si(OR)(OR')(O'R'') \qquad (I)$$

in der:

Z entweder ein Halogenatom, das aus den Atomen Chlor, Brom oder Iod ausgewählt ist, oder eine Amino- oder Phosphinogruppe darstellt;
R, R' und R", die gleich oder verschieden sind, jeweils unabhängig voneinander einen Alkylrest mit einem bis vier Kohlenstoffatomen darstellen,
$R_1$ einen zweiwertigen Rest darstellt, der von einer gesättigten oder ungesättigten aliphatischen Kohlenwasserstoffkette mit 1 bis 30 Kohlenstoffatomen abgeleitet ist, in die ggf. ein oder mehrere Strukturkettenglieder eingesetzt sind, die aus der Arylengruppe oder den Fragmenten -O-, -S-, -O-C(=O)-, -N($R_6$)-C(=O)- oder -N($R_6$)- ausgewählt sind, in denen $R_6$ ein Wasserstoffatom, einen aliphatischen Kohlenwasserstoffrest mit 1 bis 6 Kohlenstoffatomen, einen Benzylrest oder einen Phenethylrest darstellt, wobei diese Kette nicht

substituiert oder mit einem oder mehreren Resten substituiert ist, die aus den Halogenatomen, der Hydroxygruppe, den Alkylresten mit 1 bis 4 Kohlenstoffatomen oder den Resten Benzyl oder Phenethyl ausgewählt sind; mit mindestens einem alkalischen oder erdalkalischen Silicat (II) in einem Molverhältnis (I)/(II) = 1/9 in Gegenwart von mindestens einem nichtionischen Tensid mit mizellarer Konzentration, um ein mesoporöses Siliciumoxid zu bilden, das durch die Formel (III) dargestellt ist:

$$Z\text{-}R_1\text{-}SiO_{1,5}9SiO_2 \qquad \text{(III)}$$

wobei auf diesen Schritt a)
ein Schritt (b) folgt, in dem auf dem mesoporösen Siliciumoxid der Formel (III) ein Äquivalent einer mit (Δ) N-H dargestellten organischen Verbindung verankert wird, die mindestens eine Gruppe -NH- aufweist, die mit der Funktion Z des mesoporösen Siliciumoxids reagieren kann, um das funktionalisierte mesoporöse Siliciumoxid zu bilden, das durch die Formel (IV) dargestellt wird:

$$(\Delta)N\text{-}R_1\text{-}SiO_{1,5},9SiO_2 \qquad \text{(IV)},$$

wobei auf den Schritt (b) ein Schritt (c) der Komplexierung eines Metallkations eines Übergangsmetalls, eines Edelmetalls, eines Lanthanids oder eines Actinids [Unterstützung: Seite 4, Zeilen 9-10] durch Reaktion des durch die Formel (IV) dargestellten funktionalisierten mesoporösen Siliciumoxids mit einem Salz dieses Kations folgt, um einen metallorganischen Komplex (V) zu bilden.

**2.** Verfahren nach Anspruch 1, in dem $R_1$ den zweiwertigen Rest der Formel ($R_{1a}$) darstellt:

$$-(CH_2)_o-(Q)_q-(CH_2)_r-(Ar)_s-(CH_2)_t-(U)_u-(CH_2)_v- \qquad (R_{1a}),$$

in der:

o, r, t und v, die gleich oder verschieden sind, unabhängig voneinander eine ganze Zahl darstellen, die größer als oder gleich 0 und kleiner als oder gleich 6 ist,
Q und U, die gleich oder verschieden sind, unabhängig voneinander ein Sauerstoffatom, ein Schwefelatom oder eine der Gruppen -O-C(=O)-, -C(=O)-O-, -NH-C(=O)-, -C(=O)-NH- oder -NH- darstellen,
q, s und u, die gleich oder verschieden sind, unabhängig voneinander eine ganze Zahl darstellen, die größer als oder gleich 0 und kleiner als oder gleich 1 ist,
Ar einen Arylenrest und insbesondere einen Phenylenrest darstellt, wobei gilt, dass:

wenn q gleich 1 ist, dann o von 0 verschieden ist,
wenn q gleich 1 ist und u gleich 0 ist, dann die Summe r+s+t+v von 0 verschieden ist,
wenn u gleich 1 ist, dann v von 0 verschieden ist,
wenn u gleich 1 ist und q gleich 0 ist, dann die Summe o+r+s+t von 0 verschieden ist,
wenn s gleich 0 ist und q und u jeweils gleich 1 sind, dann die Summe r+t von 0 verschieden ist, und
die Summe o+r+t+v+ kleiner als oder gleich 24 ist.

**3.** Verfahren nach Anspruch 2, bei dem $R_1$ einen der zweiwertigen Reste $-(CH_2)_x-$ darstellt, in dem x zwischen 3 und 20 beträgt und vorzugsweise zwischen 3 und 6 einschließlich ist, oder einen der Reste:

$$-CH_2\text{-}CH(OH)\text{-}CH_2\text{-}O\text{-}(CH_2)_3\text{- oder } -CH_2\text{-}(1{,}4\text{-}C_6H_4)\text{-}CH_2\text{-}NH\text{-}(CH_2)_3\text{-}.$$

**4.** Verfahren nach einem der Ansprüche 1 bis 3, bei dem das Metallkation aus den Kationen von Eisen, Kobalt, Europium, Uran, Nickel, Mangan, Kupfer, Chrom, Zink, Silber, Cadmium, Blei, Quecksilber, Gold, Platin, Palladium, Uran, Zer oder Gadolinium ausgewählt ist.

**5.** Verfahren nach einem der Ansprüche 1 bis 4, bei dem das Metallkationsalz aus dem Chlorid, dem Bromid, dem Iodid, dem Fluorid, dem Sulfat, dem Tetrafluorborat oder dem Nitrat dieses Kations ausgewählt ist.

**6.** Verfahren, wie es in einem der Ansprüche 1 bis 5 definiert ist, bei dem die Verbindung (Δ)NH aus den Polyazacyloalkanen, den Porphyrinderivaten oder den aliphatischen Polyaminen ausgewählt ist.

7. Verfahren, wie es in einem der Ansprüche 1 bis 6 definiert ist, bei dem die Verbindung (Δ)NH ausgewählt ist aus den Triazacycloalkanen und insbesondere 1,4,7-Triazacyclononan, 1,4,8-Triazacyclodekan oder 1,5,9-Triazacyclododekan, den Tetraazacycloalkanen und insbesondere 1,4,7,10-Tetraazacyclododekan (Cyclen), 1,4,7,10-Tetraazacyclotridekan, 1,4,7,11-Tetraazacyclotetradekan, 1,4,8,11-Tetraazacyclotetradekan (oder Cyclam), 1,4,8-Trimethyl-1,4,8,11-tetraazacyclotetradekan, 1,4,8,12-Tetraazacyclopentadekan, 1,5,9,13-Tetraazacyclohexadekan, 1,5,10,14-Tetraazacyclooktadekan, 1-Methyl-1,4,8,11-Tetraazacyclotetradekan, 6-Dodekyl-1,4,8,11-Tetraazacyclotetradekan, 3-Dodekyl-1,5,9,13-tetraazacyclohexadekan, 3-Dodekyl-1,5,10,14-Tetraazacyclooktadekan, 5,5,7,12,12,14-Hexamethyl-1,4,8,11-tetraazacyclotetradekan, 1-Benzyl-1,4,8,11-tetraazacyclotetradekan, 1-[(2-Pyridyl)methyl]-1,4,8,11-tetraazacyclotetradekan, 1-[(3-Pyridyl)methyl]-1,4,8,11-tetraazacyclotetradekan oder 1,4-Dibenzyl-1,4,8,11-tetraazacyclotetradekan, den Pentaazacycloalkanen und insbesondere 1,4,7,10,13-Pentaazacyclopentadekan, 4,7,11,15-Pentaazacyclooktadekan, 1,5,9,13,17-Pentaazacyclooktadekan oder 1,4,7,10-Tetraethyl-1,4,7,10,13-pentaazacyclopentadekan, den Hexaazacycloalkanen und insbesondere 1,4,7,10,13,16-Hexaazacyclooktadekan, 1,5,9,13,17,20-Hexaazacyclotetrakosan oder 1,4,7,10,13-Pentaethyl-1,4,7,10,13,16-hexaazacyclooktadekan, den Oktaazacycloalkanen und insbesondere 1,4,8,11,15,18,22,25-Oktaazacyclooktakosan, 6,6,13,13,20,20,27,27-Oktamethyl-1,4,8,11,15,18,22,25-oktaazacyclooktakosan, 6,6,13,13,20,20,27,27-Oktamethyl-1,4,8,11,15,18,22,25-oktaazacyclooktakosan, 1,4,8,11,15,18,22,25-Oktaazacyclooktakosan, 6,6,13,13,20, 20,27,27-Oktamethyl-1,4,8,11, 15,18,22,25-oktaazacyclooktakosan oder 6,6,13,13,20,20,27, 27-Oktamethyl-1,4,8,11,15,18,22,25-oktaazacyclooktakosan-2,3,16,17-tetraon, den Hexadekaazacycloalkanen und insbesondere 1,4,8,11,15,18,22,25,29,32,36,39,43,46,50,53-Hexadekaazacyclohexapentakontan, 1,4,7,10,13,16,19,22,25, 28, 31,34,37,40,43,46-Hexadekaazacyclooktatetrakontan, 1,4,7,10,13,16,19,22,25,28,31,34,37,40,43,46-Hexadekaazacyclooktatetrakontan-2,3,14,15,26,27,38,39-oktaon, 1,4,8,11,15,18,22,25,29,32,36,39,43,46,50,53-Hexadekaazacyclohexapentakontan-2,3,16,17,30,31,44,45-oktaon oder 1,4,7,10,13,16,19,22,25,28,31,34,37,40,43,46-Hexadekaazacyclooktatetrakontan-2,3,14,15,26,27,38,39-oktaon.

8. Verfahren, wie es in einem der Ansprüche 1 bis 6 definiert ist, bei dem die Verbindung (Δ)NH ein Porphyrinderivat ist, das ausgewählt ist aus [4-(2,8,13,17-Tetraethyl-3,7,12,18-tetramethylporphyrin-5-yl)-phenylamin], [4-(2,8,13,17-Tetraethyl-3,7,12,18-tetramethylporphyrin-5-yl)-benzylamin], [4-(15-Phenylporphyrin-5-yl)-phenylamin], [4-(15-Phenylporphyrin-5-yl)-benzylamin], [4-(10,15,20-Triphenylporphyrin-5-yl)-phenylamin] oder [4-(10,15,20-Triphenylporphyrin-5-yl)-benzylamin].

9. Verfahren, wie es in einem der Ansprüche 1 bis 6 definiert ist, bei dem die Verbindung (Δ)NH ausgewählt ist aus den Triazaalkanen und insbesondere 4-Azaheptan-1,7-diamin, 4-Azaoktan-1,8-diamin oder 5-Azanonan-1,9-diamin, den Tetraazaalkanen und insbesondere 4,7-Diazadekan-1,10-diamin, 4,8-Diazaundekan-1,11-diamin, 5,9-Diazadodekan-1,12-diamin, 5,8-Diazadodekan-1,12-diamin, 4,8-Diazadodekan-1,12-diamin, 5,9-Diazatridekan-1,13-diamin, 5,10-Diazatetradekan-1,14-diamin, 6,10-Diazapentadekan-1,15-diamin, den Pentaazaalkanen und insbesondere 1,4,7-Triazatridekan-1,3-diamin, 4,8,12-Triazahexadekan-1,16-diamin oder 5,8,11-Triazapentadekan-1,15-diamin oder den Hexaazaalkanen und insbesondere 4,7,10,13-Tetraazahexadekan-1,16-diamin oder 5,9,13,17-Tetraazaeikosan-1,20-diamin.

10. Metallorganischer Komplex (V), der gemäß dem Verfahren nach einem der Ansprüche 1 bis 9 erhältlich ist.

11. Metallorganischer Komplex (V), der durch Reaktion eines funktionalisierten mesoporösen Siliciumoxids der Formel (IV) :

$$(\Delta)N\text{-}R_1\text{-}SiO_{1,5},\ 9SiO_2 \qquad (IV),$$

mit einem Metallkation eines Übergangsmetalls, eines Edelmetalls, eines Lanthanids oder eines Actinids erhalten wird,
worin $R_1$ einen zweiwertigen Rest darstellt, der von einer gesättigten oder ungesättigten aliphatischen Kohlenwasserstoffkette mit 1 bis 30 Kohlenstoffatomen abgeleitet ist, in die ggf. ein oder mehrere Strukturkettenglieder eingesetzt sind, die aus der Arylengruppe oder den Fragmenten -O-, -S-, -O-C(=O)-, -N($R_6$)-C(=O)- oder -N($R_6$)- ausgewählt sind, in denen $R_6$ ein Wasserstoffatom, einen aliphatischen Kohlenwasserstoffrest mit 1 bis 6 Kohlenstoffatomen, einen Benzylrest oder einen Phenethylrest darstellt, wobei diese Kette nicht substituiert oder mit einem oder mehreren Resten substituiert ist, die aus den Halogenatomen, der Hydroxygruppe, den Alkylresten mit 1 bis 4 Kohlenstoffatomen oder den Resten Benzyl oder Phenethyl ausgewählt sind; und
(Δ)N- den einwertigen Aminorest darstellt, der von einer organischen Verbindung mit mindestens einer Gruppe -NHabgeleitet ist.

**12.** Komplex (V), wie er in Anspruch 11 definiert ist, bei dem $R_1$ den zweiwertigen Rest der Formel ($R_{1a}$) darstellt:

$$-(CH_2)_o-(Q)_q-(CH_2)_r-(Ar)_s-(CH_2)_t-(U)_u-(CH_2)_v- \qquad (R_{1a}),$$

in der:

o, r, t und v, die gleich oder verschieden sind, unabhängig voneinander eine ganze Zahl darstellen, die größer als oder gleich 0 und kleiner als oder gleich 6 ist,
Q und U, die gleich oder verschieden sind, unabhängig voneinander ein Sauerstoffatom, ein Schwefelatom oder eine der Gruppen -O-C(=O)-, -C(=O)-O-, -NH-C(=O)-, -C(=O)-NH- oder -NH- darstellen,
q, s und u, die gleich oder verschieden sind, unabhängig voneinander eine ganze Zahl darstellen, die größer als oder gleich 0 und kleiner als oder gleich 1 ist,
Ar einen Arylenrest und insbesondere einen Phenylenrest darstellt, wobei gilt, dass:

wenn q gleich 1 ist, dann o von 0 verschieden ist,
wenn q gleich 1 ist und u gleich 0 ist, dann die Summe r+s+t+v von 0 verschieden ist,
wenn u gleich 1 ist, dann v von 0 verschieden ist,
wenn u gleich 1 ist und q gleich 0 ist, dann die Summe o+r+s+t von 0 verschieden ist,
wenn s gleich 0 ist und q und u jeweils gleich 1 sind, dann die Summe r+t von 0 verschieden ist, und
die Summe o+r+t+v+ kleiner als oder gleich 24 ist.

**13.** Komplex (V), wie er in Anspruch 12 definiert ist, bei dem $R_1$ einen der zweiwertigen Reste $-(CH_2)_x-$ darstellt, in dem x zwischen 3 und 20 beträgt und vorzugsweise zwischen 3 und 6 einschließlich ist, oder einen der Reste:

$$-CH_2-CH(OH)-CH_2-O-(CH_2)_3- \text{ oder } -CH_2-(1,4-C_6H_4)-CH_2-NH-(CH_2)_3-.$$

**14.** Komplex (V), wie er in einem der Ansprüche 11 bis 13 definiert ist, bei dem das Metallkation ausgewählt ist aus den Kationen von Eisen, Kobalt, Europium, Uran, Nickel, Mangan, Kupfer, Chrom, Zink, Silber, Cadmium, Blei, Quecksilber, Gold, Platin, Palladium, Uran, Zer oder Gadolinium.

**15.** Komplex (V), wie er in einem der Ansprüche 11 bis 14 definiert ist, bei dem das Metallkationsalz aus dem Chlorid, dem Bromid, dem Iodid, dem Fluorid, dem Sulfat, dem Tetrafluorborat oder dem Nitrat dieses Kations ausgewählt ist.

**16.** Komplex (V), wie er in einem der Ansprüche 11 bis 15 definiert ist, bei dem der einwertige Aminorest ∆(N)- von einem Polyazacycloalkan, einem Porphyrin oder einem aliphatischen Polyamin abgeleitet ist.

**17.** Komplex (V), wie er in einem der Ansprüche 11 bis 16 definiert ist, bei dem der einwertige Aminorest ∆(N)- von einem Polyazacycloalkan abgeleitet ist, das ausgewählt ist aus den Triazacycloalkanen und insbesondere 1,4,7-Triazacyclononan, 1,4,8-Triazacyclodekan oder 1,5,9-Triazacyclododekan, den Tetraazacycloalkanen und insbesondere 1,4,7,10-Tetraazacyclododekan (Cyclen), 1,4,7,10-Tetraazacyclotridekan, 1,4,7,11-Tetraazacyclotetradekan, 1,4,8,11-Tetraazacyclotetradekan (oder Cyclam), 1,4,8-Trimethyl-1,4,8,11-tetraazacyclotetradekan, 1,4,8,12-Tetraazacyclopentadekan, 1,5,9,13-Tetraazacyclohexadekan, 1,5,10,14-Tetraazacyclooktadekan, 1-Methyl-1,4,8,11-Tetraazacyclotetradekan, 6-Dodekyl-1,4,8,11-Tetraazacyclotetradekan, 3-Dodekyl-1,5,9,13-tetraazacyclohexadekan, 3-Dodekyl-1,5,10,14-tetraazycyclooktadekan, 5,5,7,12,12,14-Hexamethyl-1,4,8,11-tetraazacyclotetradekan, 1-Benzyl-1,4,8,11-tetraazycyclotetradekan, 1-[(2-Pyridyl)methyl]-1,4,8,11-tetraazycyclotetradekan, 1-[(3-Pyridyl)methyl]-1,4,8,11-tetraazacyclotetradekan oder 1,4-Dibenzyl-1,4,8,11-tetraazacyclotetradekan, den Pentaazacycloalkanen und insbesondere 1,4,7,10,13-Pentaazacyclopentadekan, 4,7,11,15-Pentaazacyclooktadekan, 1,5,9,13,17-Pentaazacyclooktadekan oder 1,4,7,10-Tetraethyl-1,4,7,10,13-Pentaazacyclopentadekan, den Hexaazacycloalkanen und insbesondere 1,4,7,10,13,16-Hexaazacyclooktadekan, 1,5,9,13,17, 20-Hexaazacyclotetrakosan oder 1,4,7,10,13-Pentaethyl-1,4,7,10,13,16-hexaazacyclooktadekan, den Oktaazacycloalkanen und insbesondere 1,4,8,11,15,18,22,25-Oktaazacyclooktakosan, 6,6,13,13,20,20,27,27-Oktamethyl-1,4,8, 11,15,18, 22,25-Oktaazacyclooktakosan, 6,6,13,13,20,20,27,27-Oktamethyl-1,4,8,11,15,18,22,25-oktaazacyclooktakosan, 1,4,8,11,15,18,22,25-Oktaazacyclooktakosan, 6,6,13,13,20, 20,27,27-Oktamethyl-1,4,8,11, 15,18,22,25-oktaazacyclooktakosan oder 6,6,13,13,20,20,27,27-Oktamethyl-1,4,8,11,15,18, 22,25-oktaazacyclooktakosan-2,3,16,17-tetraon, den Hexadekaazacycloalkanen und insbesondere 1,4,8,11,15,18,22,25, 29,32, 36,39,43,46,50,53-Hexadekaazacyclohexapentakontan, 1,4,7, 10,13,16,19,22,25,28,31,34,37,40,43,46-Hexadekaazacyclooktatetrakontan, 1,4,7,10,13,16,19,22,25,28,31,34,37, 40, 43,46-Hexadekaazacyclooktatetrakontan-2,3,14,15,26,27, 38,39-oktaon, 1,4,8,11,15,18,22,25,29,32,36,39,43,46,50,53-Hexadekaazacyclohexapentakontan-2,3,16,17,30,31,44,45-oktaon oder 1,4,7,10,13,16,19,22,25,28,31,34,37,40,43,46-Hexadekaazacyclooktatetrakontan-2,3,14,15,26,27,38,39-oktaon.

**18.** Komplex (V), wie er in einem der Ansprüche 11 bis 16 definiert ist, bei dem der einwertige Aminorest Δ(N)- von einem Porphyrinderivat abgeleitet ist, das ausgewählt ist aus den Derivaten von [4-(2,8,13,17-Tetraethyl-3,7,12,18-tetramethylporphyrin-5-yl)-phenylamin], [4-(2,8,13,17-Tetraethyl-3,7,12,18-tetramethylporphyrin-5-yl)-benzylamin], [4-(15-Phenylporphyrin-5-yl)-phenylamin], [4-(15-Phenylporphyrin-5-yl)-benzylamin], [4-(10,15,20-Triphenylporphyrin-5-yl)-phenylamin] oder [4-(10,15,20-Triphenylporphyrin-5-yl)-benzylamin].

**19.** Komplex (V), wie er in einem der Ansprüche 11 bis 16 definiert ist, wobei der einwertige Aminorest Δ(N)- von einem aliphatischen Polyamin abgeleitet ist, das ausgewählt ist aus den Triazaalkanen und insbesondere 4-Azaheptan-1,7-diamin, 4-Azaoktan-1,8-diamin oder 5-Azanonan-1,9-diamin, den Tetraazaalkanen und insbesondere 4,7-Diazadekan-1,10-diamin, 4,8-Diazaundekan-1,11-diamin, 5,9-Diazadodekan-1,12-diamin, 5,8-Diazadodekan-1,12-diamin, 4,8-Diazadodekan-1,12-diamin, 5,9-Diazatridekan-1,13-diamin, 5,10-Diazatetradekan-1,14-diamin, 6,10-Diazapentadekan-1,15-diamin, den Pentaazaalkanen und insbesondere 1,4,7-Triazatridekan-1,3-diamin, 4,8,12-Triazahexadekan-1,16-diamin oder 5,8,11-Triazapentadekan-1,15-diamin oder den Hexaazaalkanen und insbesondere 4,7,10,13-Tetraazahexadekan-1,16-diamin oder 5,9,13,17-Tetraazaeikosan-1,20-diamin.

**20.** Verwendung des Komplexes (V), wie er in einem der Ansprüche 10 bis 19 definiert ist, zum Trennen eines bestimmten Gases von einem Gasgemisch.

**21.** Verwendung, wie sie in Anspruch 20 definiert ist, angewandt auf die Trennung des Sauerstoffs von der Luft entweder zur Erzeugung von reinem Sauerstoff oder zur Entfernung des Sauerstoffs aus der Luft.

**22.** Verwendung des Komplexes (V), wie er in einem der Ansprüche 10 bis 19 definiert ist, in der heterogenen Katalyse für die Abwasserreinigung, für die Reinigung, Aktivierung und Lagerung von Gasen, für die Herstellung von photolumineszenten Werkstoffen und Werkstoffen mit magnetischen oder elektrischen Eigenschaften.

**23.** Funktionalisiertes mesoporöses Siliciumoxid, das als Synthesezwischenprodukt des Komplexes (V) der Ansprüche 10 bis 19 geeignet ist und der folgenden Formel (IV) entspricht:

$$(\Delta)N\text{-}R_1\text{-}SiO_{1,5},9SiO_2 \qquad (IV),$$

in der $R_1$ einen zweiwertigen Rest darstellt, der von einer gesättigten oder ungesättigten aliphatischen Kohlenwasserstoffkette mit 1 bis 30 Kohlenstoffatomen abgeleitet ist, in die ggf. ein oder mehrere Strukturkettenglieder eingesetzt sind, die aus der Arylengruppe oder den Fragmenten -O-, -S-, -O-C(=O)-, -N($R_6$)-C(=O)- oder -N($R_6$)- ausgewählt sind, in denen $R_6$ ein Wasserstoffatom, einen aliphatischen Kohlenwasserstoffrest mit 1 bis 6 Kohlenstoffatomen, einen Benzylrest oder einen Phenethylrest darstellt, wobei diese Kette nicht substituiert oder mit einem oder mehreren Resten substituiert ist, die aus den Halogenatomen, der Hydroxygruppe, den Alkylresten mit 1 bis 4 Kohlenstoffatomen oder den Resten Benzyl oder Phenethyl ausgewählt sind und (Δ)N- den einwertigen Aminorest darstellt, der von einer organischen Verbindung mit mindestens einer Gruppe -NH- abgeleitet ist.

**24.** Funktionalisiertes mesoporöses Siliciumoxid (IV) nach Anspruch 23, in dem $R_1$ so beschaffen ist, wie in einem der Ansprüche 12 oder 13 definiert ist, und/oder bei dem (Δ)N-so beschaffen ist, wie es in einem der Ansprüche 17 bis 19 definiert ist.

**25.** Verfahren zur Herstellung des funktionalisierten mesoporösen Siliciumoxids von Anspruch 23 oder 24, umfassend:

einen Schritt (a) der Hydrolyse und der Polykondensation einer Mischung von mindestens einer Verbindung der Formel (I) :

$$Z\text{-}R_1\text{-}Si\ (OR)\ (OR')\ (O'R'') \qquad (I)$$

in der:

Z entweder ein Halogenatom, das aus den Atomen Chlor, Brom oder Iod ausgewählt ist, oder eine Amino- oder Phosphinogruppe darstellt;

R, R' und R", die gleich oder verschieden sind, jeweils unabhängig voneinander einen Alkylrest mit einem bis vier Kohlenstoffatomen darstellen,
$R_1$ einen zweiwertigen Rest darstellt, der von einer gesättigten oder ungesättigten aliphatischen Kohlenwasserstoffkette mit 1 bis 30 Kohlenstoffatomen abgeleitet ist, in die ggf. ein oder mehrere Strukturkettenglieder eingesetzt sind, die aus der Arylengruppe oder den Fragmenten -O-, -S-, -O-C(=O)-, -N($R_6$)-C(=O)- oder -N($R_6$)- ausgewählt sind, in denen $R_6$ ein Wasserstoffatom, einen aliphatischen Kohlenwasserstoffrest mit 1 bis 6 Kohlenstoffatomen, einen Benzylrest oder einen Phenethylrest darstellt, wobei diese Kette nicht substituiert oder mit einem oder mehreren Resten substituiert ist, die aus den Halogenatomen, der Hydroxygruppe, den Alkylresten mit 1 bis 4 Kohlenstoffatomen oder den Resten Benzyl oder Phenethyl ausgewählt sind;
mit mindestens einem alkalischen oder erdalkalischen Silicat (II) in einem Molverhältnis (I)/(II) = 1/9 in Gegenwart von mindestens einem nichtionischen Tensid in mizellarer Konzentration, um ein mesoporöses Siliciumoxid zu bilden, das durch die Formel (III) dargestellt ist:

$$Z\text{-}R_1\text{-}SiO_{1,5}9SiO_2 \qquad \text{(III)},$$

wobei auf diesen Schritt (a)
ein Schritt (b) folgt, in dem auf dem mesoporösen Siliciumoxid der Formel (III) ein Äquivalent einer mit (Δ)N-H dargestellten organischen Verbindung verankert wird, die mindestens eine Gruppe -NH- aufweist, die mit der Funktion Z des mesoporösen Siliciumoxids reagieren kann, um das funktionalisierte mesoporöse Siliciumoxid der Formel (IV) zu bilden.

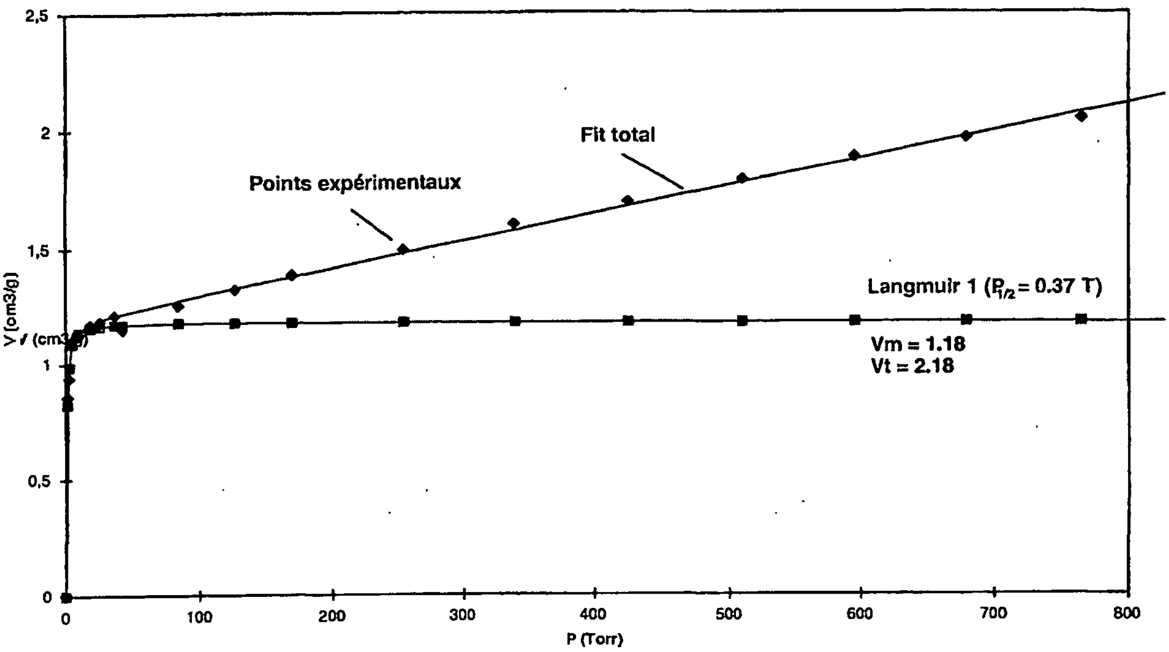


Figure 1. Isotherme d'adsorption de $O_2$ sur le matériau **$M_B$(7-Cu)** (1er cycle)

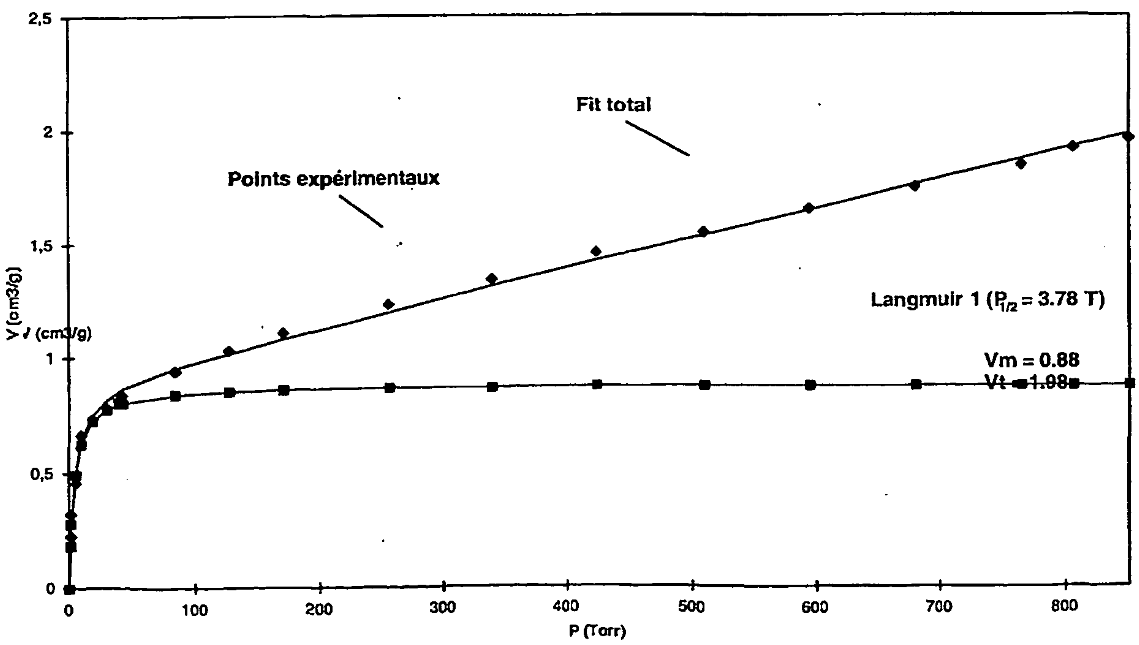


Figure 2. Isotherme d'adsorption de $O_2$ sur le matériau **$M_B$(9-u)** (1er cycle)